(19) **Europäisches Patentamt / European Patent Office / Office européen des brevets**

(11) **EP 4 654 708 A1**

(12) **EUROPEAN PATENT APPLICATION**
published in accordance with Art. 153(4) EPC

(43) Date of publication:
**26.11.2025 Bulletin 2025/48**

(21) Application number: **24749534.4**

(22) Date of filing: **17.01.2024**

(51) International Patent Classification (IPC):
***H04W 72/0446*** (2023.01)

(52) Cooperative Patent Classification (CPC):
**H04W 52/02; H04W 72/0446; H04W 72/0453**

(86) International application number:
**PCT/CN2024/072766**

(87) International publication number:
**WO 2024/160053 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 CN 202310128612**

(71) Applicant: **Huawei Technologies Co., Ltd.**
**Shenzhen, Guangdong 518129 (CN)**

(72) Inventors:
- **YI, Feng**
  **Shenzhen, Guangdong 518129 (CN)**
- **SU, Hongjia**
  **Shenzhen, Guangdong 518129 (CN)**
- **LU, Lei**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **SIDELINK POWER CONTROL METHOD AND APPARATUS**

(57) This application provides a sidelink power control method and apparatus. The sidelink power control method includes: A first terminal device receives first indication information sent by a network device, where the first indication information indicates a first adjustment value corresponding to a first transmission occasion, the first transmission occasion corresponds to at least one symbol, and the first adjustment value is used for determining first transmit power. The first terminal device sends sidelink information to a second terminal device on the first transmission occasion based on the first transmit power. According to the foregoing method, a problem that decoding performance of Uu transmission and decoding performance of SL transmission are affected due to excessively large interference between Uu and an SL when a same time-frequency resource is used for the Uu and the SL can be avoided.

FIG. 9

## Description

This application claims priority to Chinese Patent Application No. 202310128612.8, filed with the China National Intellectual Property Administration on January 31, 2023 and entitled "SIDELINK POWER CONTROL METHOD AND APPARATUS", which is incorporated herein by reference in its entirety.

## TECHNICAL FIELD

This application relates to the communication field, and more specifically, to a sidelink power control method and apparatus.

## BACKGROUND

Wireless communication technologies have experienced rapid development in the past decades. Services supported by wireless communication systems have also evolved from voice and messaging services to services supporting high-speed wireless data communication. In addition, a quantity of wireless connections around the world is continuously and rapidly increasing, and massive new wireless service types, such as the internet of things and autonomous driving, are also emerging. With an increase in a quantity of communication-required scenarios, a device-to-device (Device-to-Device, D2D) technology has developed rapidly in recent years because of an advantage that direct communication can be performed with or without network infrastructure. The D2D technology is applied, so that load of a cellular network can be alleviated, battery power consumption of a user equipment can be reduced, a data rate can be increased, and a requirement of a proximity service can be well met. From a perspective of a link, a link for direct communication between users is defined as a sidelink (Sidelink, SL), which may also be referred to as sidelink communication.

Currently, the SL and air interface communication (UTRAN-to-UE, Uu) coexist (semi-)statically, to avoid mutual interference caused by excessively high power. However, after a dynamic coexistence mechanism for the SL and the Uu is introduced, how to avoid mutual interference between the SL and the Uu becomes a problem that urgently needs to be resolved.

## SUMMARY

This application provides a sidelink power control method and apparatus. According to the method, a problem that decoding performance of Uu transmission and decoding performance of SL transmission are affected due to excessively large interference between Uu and an SL when a same time-frequency resource is used for the Uu and the SL can be avoided.

According to a first aspect, a sidelink power control method is provided. The method includes: A first terminal device receives first indication information sent by a network device, where the first indication information indicates a first adjustment value corresponding to a first transmission occasion, the first transmission occasion corresponds to at least one symbol, and the first adjustment value is used for determining first transmit power. The first terminal device sends sidelink information to a second terminal device on the first transmission occasion based on the first transmit power.

The first terminal device includes a device that can perform device-to-device communication.

Optionally, the device-to-device communication includes vehicle-to-everything V2X communication.

It should be understood that, that the first adjustment value corresponds to the first transmission occasion means that, for different transmission occasions $i,$ the first terminal device may determine different power adjustment values, namely, the first adjustment value.

Optionally, the first transmission occasion is used for a third terminal device to send uplink information to the network device, or is used for the network device to send downlink information to a third terminal device, where a frequency domain corresponding to the uplink information or the downlink information overlaps a frequency domain corresponding to the sidelink information.

It should be understood that a time-frequency resource used for uplink transmission may completely or partially overlap a time-frequency resource used for sidelink transmission; or a time-frequency resource used for downlink transmission may completely or partially overlap a time-frequency resource used for sidelink transmission; or the network device simultaneously performs uplink information transmission with the third device and performs downlink information transmission with a fourth device, where a time-frequency resource used for sidelink transmission may completely or partially overlap a time-frequency resource used for the uplink transmission, and the time-frequency resource used for the sidelink transmission may completely or partially overlap a time-frequency resource used for the downlink transmission.

Optionally, the first indication information is carried in RRC signaling or DCI signaling.

With reference to the first aspect, in some implementations of the first aspect, the first terminal device determines the first transmit power based on a third power value and/or a fourth power value. The third power value is determined by the first terminal device based on the first adjustment value and a first power value. The fourth power value is determined by the first terminal device based on the first adjustment value and a second power value, or the fourth power value is determined by the first terminal device based on a second adjustment value and a second power value that correspond to the first transmission occasion, where the second adjustment value is indicated by the first indication information. The first power value is determined by the first terminal device based on a first indicated power value, downlink transmission loss, and a quantity of resource blocks RBs, where the first indicated power value and the downlink transmission loss are determined by the first terminal device, and the RB is used for sending sidelink information on the first transmission occasion. The second power value is determined by the first terminal device based on a second indicated power value, sidelink transmission loss, and the quantity of RBs, where the second indicated power value and the sidelink transmission loss are determined by the first terminal device.

It should be understood that the first indicated power value and the second indicated power value may be indicated by the network device to the first terminal device. For example, the first indicated power value and the second indicated power value are sent to the first terminal device by using indication information, including RRC signaling, and the first terminal device determines the first indicated power value and the second indicated power value based on the indication information.

It should be understood that the downlink transmission path loss is obtained by the first terminal device through calculation based on a reference signal, for example, is obtained based on a synchronization signal and PBCH block (synchronization signal and PBCH block, SS/PBCH) or a CSI-RS. The sidelink transmission path loss is determined by the first terminal device based on a difference between reference signal transmit power and reference signal received power measured by the second terminal device.

It should be understood that the first indication information may indicate only the first adjustment value, the first power value is a calculated power value obtained based on downlink path loss, the first adjustment value may be used as a power adjustment value for adjusting the first power value to obtain the third power value, the second power value is a calculated power value obtained based on sidelink path loss, and the first adjustment value may be used as a power adjustment value for adjusting the second power value to obtain the fourth power value.

It should be further understood that the first indication information may indicate both the first adjustment value and the second adjustment value, the first adjustment value may be the same as or different from the second adjustment value, the first power value is a calculated power value obtained based on downlink path loss, the first adjustment value may be used as a power adjustment value for adjusting the first power value to obtain the third power value, the second power value is a calculated power value obtained based on sidelink path loss, and the second adjustment value may be used as a power adjustment value for adjusting the second power value to obtain the fourth power value.

It should be further understood that, that the first terminal device determines the first transmit power based on the third power value and/or the fourth power value means that power control and adjustment of a terminal device may take effect only on power control that is based on downlink path loss, or may take effect only on power control that is based on sidelink path loss, or may take effect on power control that is based on both downlink path loss and sidelink path loss. To be specific, the first terminal device may determine the first transmit power based on the third power value and the second power value, or the first terminal device may determine the first transmit power based on the first power value and the fourth power value, or the first terminal device may determine the first transmit power based on the third power value and the fourth power value.

For example, when only the downlink path loss is considered during the power control and adjustment of the terminal device, a calculation formula for the first transmit power $P'_{\text{PSSCH}}(i)$ is as follows:

$$P'_{\text{PSSCH}}(i) = min\left(P_{\text{CMAX}}, P_{\text{MAX,CBR}}, min\left(P'_{\text{PSSCH},D}(i), P_{\text{PSSCH},SL}(i)\right)\right) \text{ (dBm)}.$$

$P'_{\text{PSSCH},D}(i)$ is a third power value obtained on a first transmission occasion $i$ based on the downlink path loss. When the first terminal device is configured to determine PSCCH/PSSCH transmit power based on the downlink path loss, and a higher layer parameter, that is, a dl-P0-PSSCH-PSCCH parameter, is configured and indicates a power control value $P_{O,D}$ that is based on the downlink path loss,

$$P'_{\text{PSSCH},D}(i) = P_{O,D} + 10\,log_{10}\left(2^{\mu} * M_{\text{RB}}^{\text{PSSCH}}(i)\right) + \alpha_D * PL_D + f(i) \text{ (dBm);}$$

or

otherwise, when the first terminal device is not configured to determine PSCCH/PSSCH transmit power based on the downlink path loss, $P'_{\text{PSSCH},D}(i) = min(P_{CMAX}, P_{\text{MAX,CBR}})$ (dBm).

In the formula, $f(i)$ is the first adjustment value. $P_{CMAX}$ is maximum sidelink transmit power of a UE. Refer to the 3GPP TS 38.101-1 standard. $P_{MAX,CBR}$ is determined based on an sl-MaxTxPower parameter. The sl-MaxTxPower parameter indicates a maximum power value of the UE in sidelink transmission. The value is related to a priority of PSSCH transmission and a CBR range. A value of $P_{O,D}$ is a value of dl-P0-PSSCH-PSCCH. If power control parameters dl-P0-PSSCH-PSCCH and dl-Alpha-PSSCH-PSCCH that are based on the downlink path loss are provided and dl-Alpha-PSSCH-PSCCH indicates a power control compensation factor of the downlink path loss, a power control compensation factor $\alpha_D$ based on the downlink path loss is a value provided by dl-Alpha-PSSCH-PSCCH; or otherwise, $\alpha_D = 1$. $PL_D$ represents downlink transmission loss estimated by the UE based on a reference signal, $M_{RB}^{PSSCH}(i)$ represents a quantity of RBs allocated to PSSCH transmission at a transmission moment $i$, and $\mu$ is determined based on a current subcarrier spacing configuration.

$P_{PSSCH,SL}(i)$ is a calculated power value, namely, a second power value, obtained on the first transmission occasion $i$ based on the sidelink path loss. When the first terminal device is configured to determine PSCCH/PSSCH transmit power based on the sidelink path loss, to be specific, a power control parameter, that is, an sl-P0-PSSCH-PSCCH parameter, that is based on the sidelink path loss is provided, and sl-P0-PSSCH-PSCCH indicates a power control value $P_{O,SL}$ that is based on the sidelink path loss, and a cast type in an SCI format indicates a unicast (unicast) type, or a 2nd-stage SCI format is SCI-2C,

$$P_{\text{PSSCH},SL}(i) = P_{O,SL} + 10\,log_{10}\left(2^{\mu} * M_{\text{RB}}^{\text{PSSCH}}(i)\right) + \alpha_{SL} * PL_{SL} \text{ (dBm)};$$

or

otherwise, $P_{PSSCH,SL}(i) = min(P_{CMAX}, P_{PSSCH,D}(i))$ (dBm).

In the formula, a value of $P_{O,SL}$ is a value of sl-P0-PSSCH-PSCCH. If sl-Alpha-PSSCH-PSCCH is provided and sl-Alpha-PSSCH-PSCCH indicates a power control compensation factor that is based on the sidelink path loss, $\alpha_{sl}$ is a value provided by sl-Alpha-PSSCH-PSCCH; or otherwise, $\alpha_{sl} = 1$. $M_{RB}^{PSSCH}(i)$ represents the quantity of RBs allocated to the PSSCH transmission at the transmission moment $i$. $PL_{SL} = referenceSignalPower - higher layer filtered RSRP$ represents the sidelink loss. *referenceSignalPower* is total power, in all REs, of PSSCH transmission on an antenna port of the UE, and may be obtained by a higher layer filter by using an sl-FilterCoefficient configuration. *higher layer filtered RSRP* is an RSRP value, and is an RSRP value obtained by a receive-end UE by using an sl-FilterCoefficient filter configuration based on a PSSCH demodulation reference signal (Demodulation Reference Signal, DMRS) in PSSCH transmission. The value is reported to a transmit-end UE of the PSSCH.

For example, when only the sidelink path loss is considered during the power control and adjustment of the terminal device, a calculation formula for the first transmit power $P'_{PSSCH}(i)$ is as follows:

$$P'_{\text{PSSCH}}(i) = min\left(P_{\text{CMAX}}, P_{\text{MAX,CBR}}, min\left(P_{\text{PSSCH},D}(i), P'_{\text{PSSCH},SL}(i)\right)\right) \text{ (dBm)}.$$

$P_{PSSCH,D}(i)$ is a calculated power value, namely, a first power value, obtained on the first transmission occasion $i$ based on the downlink path loss. When a dl-P0-PSSCH-PSCCH parameter is provided:

$$P_{\text{PSSCH},D}(i) = P_{O,D} + 10\,log_{10}\left(2^{\mu} * M_{\text{RB}}^{\text{PSSCH}}(i)\right) + \alpha_D * PL_D \text{ (dBm)};$$

or

otherwise, $P_{PSSCH,D}(i) = min(P_{CMAX}, P_{MAX,CBR})$ (dBm).

In the formula, $P_{CMAX}$ is maximum sidelink transmit power of a UE. $P_{MAX,CBR}$ is determined based on an sl-MaxTxPower parameter. The value is related to a priority of PSSCH transmission and a CBR range. A value of $P_{O,D}$ is a value of dl-P0-PSSCH-PSCCH. If dl-Alpha-PSSCH-PSCCH is provided, $\alpha_D$ is a value provided by dl-Alpha-PSSCH-PSCCH; or otherwise, $\alpha_D = 1$. $PL_D$ represents downlink transmission loss estimated by the UE based on a reference signal, and $M_{RB}^{PSSCH}(i)$ represents a quantity of RBs allocated to PSSCH transmission at a transmission moment $i$.

$P'_{PSSCH,SL}(i)$ is a fourth power value obtained on the first transmission occasion $i$ based on the sidelink path loss. When an sl-P0-PSSCH-PSCCH parameter is provided, and a cast type in an SCI format indicates a unicast (unicast) type, or a 2nd-stage SCI format is SCI-2C:

$$P'_{\mathrm{PSSCH},SL}(i) = P_{O,SL} + 10\,log_{10}\left(2^{\mu} * M_{\mathrm{RB}}^{\mathrm{PSSCH}}(i)\right) + \alpha_{SL} * PL_{SL} + f(i)\ (\mathrm{dBm});$$

or

otherwise, $P'_{\mathrm{PSSCH},SL}(i) = min(P_{\mathrm{CMAX}}, P_{\mathrm{PSSCH},D}(i))$ (dBm).

In the formula, $f(i)$ is the first adjustment value.

It should be understood that $f(i)$ may alternatively be replaced with the second adjustment value $f_2(i)$. To be specific, the fourth power value is determined based on the second adjustment value and the second power value.

For example, when both the downlink path loss and the sidelink path loss are considered during the power control and adjustment of the terminal device, a calculation formula for the first transmit power $P'_{\mathrm{PSSCH}}(i)$ is as follows:

$$P'_{\mathrm{PSSCH}}(i) = min\left(P_{\mathrm{CMAX}}, P_{\mathrm{MAX,CBR}}, min\left(P'_{\mathrm{PSSCH},D}(i), P'_{\mathrm{PSSCH},SL}(i)\right)\right)\ (\mathrm{dBm});$$

or

the formula may be expressed as follows:

$$P'_{\mathrm{PSSCH}}(i) = min\left(P_{\mathrm{CMAX}}, P_{\mathrm{MAX,CBR}}, min\left(P_{\mathrm{PSSCH},D}(i), P_{\mathrm{PSSCH},SL}(i)\right) + f(i)\right)\ (\mathrm{dBm}).$$

$P'_{\mathrm{PSSCH},D}(i)$ is a third power value obtained on a first transmission occasion $i$ based on the downlink path loss, and is determined based on the first adjustment value and the first power value. For a manner of calculating $P'_{\mathrm{PSSCH},D}(i)$, refer to the calculation manner in the foregoing examples. Details are not described herein again.

$P'_{\mathrm{PSSCH},SL}(i)$ is a fourth power value obtained on the first transmission occasion i based on the sidelink path loss, and is determined based on the first adjustment value or the second adjustment value and the second power value. For a manner of calculating $P'_{\mathrm{PSSCH},SL}(i)$, refer to the calculation manner in the foregoing examples. Details are not described herein again.

With reference to the first aspect, in some implementations of the first aspect, the first adjustment value is any adjustment value in a first set, the first set includes at least one adjustment value in a predefined adjustment value set, the second adjustment value is any adjustment value in a second set, and the second set includes at least one adjustment value in a predefined adjustment value set.

With reference to the first aspect, in some implementations of the first aspect, the first adjustment value is equal to a sum of at least one adjustment value in a first set and a third adjustment value, the first set includes at least one adjustment value in a predefined adjustment value set, the second adjustment value is equal to a sum of at least one adjustment value in a second set and a fourth adjustment value, the second set includes at least one adjustment value in a predefined adjustment value set, the third adjustment value and the fourth adjustment value correspond to a second transmission occasion, the second transmission occasion corresponds to at least one symbol, the third adjustment value is used for determining second transmit power or both the third adjustment value and the fourth adjustment value are used for determining second transmit power, the first terminal device sends sidelink information to the second terminal device on the second transmission occasion at the second transmit power, and the second transmission occasion is earlier than the first transmission occasion.

It should be understood that a power adjustment value may take effect in two manners. In one manner, the adjustment value directly takes effect on power control, to be specific, an absolute adjustment value of the adjustment value is delivered in indication information. In the other manner, the adjustment value takes effect on power control together with a historical adjustment value, to be specific, a relative adjustment value of the adjustment value is delivered in indication information.

It should be understood that the first set or the second set may include only one adjustment value, and the adjustment value is any value in a predefined adjustment value set. For example, the first set may include only $f(i)$, and $f(i)$ is any value corresponding to the first transmission occasion $i$ in a predefined adjustment value set (for example, a predefined value correspondence table).

It should be understood that the first set or the second set may include a plurality of adjustment values, and the plurality of adjustment values are any values in a predefined adjustment value set. Any one of the plurality of adjustment values may be determined as the first adjustment value or the second adjustment value based on an index value $l$. The index value $l$ may be determined by the first terminal device or indicated by the network device. For example, the first set may include a plurality of adjustment values, and the first adjustment value may be $f(i, l)$, to be specific, an adjustment value determined based on a corresponding first transmission occasion $i$ and a corresponding index value $l$ in the first set.

Optionally, in the example in the foregoing implementation, the first adjustment value $f(i)$ may be replaced with $f(i,$

*l*), to obtain three new calculation manners.

For example, when only the downlink path loss is considered during the power control and adjustment of the terminal device, a calculation formula for the first transmit power $P'_{\text{PSSCH}}(i)$ is as follows:

$$P'_{\text{PSSCH}}(i,l) = min\left(P_{\text{CMAX}}, P_{\text{MAX,CBR}}, min\left(P'_{\text{PSSCH,D}}(i,l), P_{\text{PSSCH,SL}}(i)\right)\right) \text{ (dBm)}.$$

$P'_{\text{PSSCH,D}}(i, l)$ is a third power value obtained on a first transmission occasion *i* based on the downlink path loss by using an adjustment value corresponding to an index *l*. When the first terminal device is configured to determine PSCCH/PSSCH transmit power based on the downlink path loss, and a higher layer parameter, that is, a dl-P0-PSSCH-PSCCH parameter, is configured and indicates a power control value $P_{O,D}$ that is based on the downlink path loss,

$$P'_{\text{PSSCH,D}}(i,l) = P_{O,D} + 10\,log_{10}\left(2^{\mu} * M_{\text{RB}}^{\text{PSSCH}}(i)\right) + \alpha_D * PL_D + f(i,l) \text{ (dBm);}$$

or

otherwise, when the first terminal device is not configured to determine PSCCH/PSSCH transmit power based on the downlink path loss, $P'_{\text{PSSCH,D}}(i, l) = min(P_{CMAX}, P_{\text{MAX,CBR}})$ (dBm).

In the formula, $f(i, l)$ is the first adjustment value. $P_{CMAX}$ is maximum sidelink transmit power of a UE. $P_{\text{MAX,CBR}}$ is determined based on an sl-MaxTxPower parameter. The value is related to a priority of PSSCH transmission and a CBR range. A value of $P_{O,D}$ is a value of dl-P0-PSSCH-PSCCH. If dl-Alpha-PSSCH-PSCCH is provided, $\alpha_D$ is a value provided by dl-Alpha-PSSCH-PSCCH; or otherwise, $\alpha_D = 1$. $PL_D$ represents downlink transmission loss estimated by the UE based on a reference signal, and $M_{\text{RB}}^{\text{PSSCH}}(i)$ represents a quantity of RBs allocated to PSSCH transmission at a transmission moment i.

$P_{\text{PSSCH,SL}}(i)$ is a calculated power value, namely, a second power value, obtained on the first transmission occasion *i* based on the sidelink path loss. When the first terminal device is configured to determine PSCCH/PSSCH transmit power based on the sidelink path loss, to be specific, a power control parameter, that is, an sl-P0-PSSCH-PSCCH parameter, that is based on the sidelink path loss is provided, and a cast type in an SCI format indicates a unicast type, or a 2nd-stage SCI format is SCI-2C:

$$P_{\text{PSSCH,SL}}(i) = P_{O,SL} + 10\,log_{10}\left(2^{\mu} * M_{\text{RB}}^{\text{PSSCH}}(i)\right) + \alpha_{SL} * PL_{SL} \text{ (dBm);}$$

or

otherwise, $P_{\text{PSSCH,SL}}(i) = min(P_{CMAX}, P_{\text{PSSCH,D}}(i))$ (dBm).

In the formula, a value of $P_{O,SL}$ is a value of sl-P0-PSSCH-PSCCH. If sl-Alpha-PSSCH-PSCCH is provided, $\alpha_{sl}$ is a value provided by sl-Alpha-PSSCH-PSCCH; or otherwise, $\alpha_{sl} = 1$. $M_{\text{RB}}^{\text{PSSCH}}(i)$ represents the quantity of RBs allocated to the PSSCH transmission at the transmission moment *i*. $PL_{SL} = referenceSignalPower - higher\ layer\ filtered\ RSRP$ represents the sidelink loss. *referenceSignalPower* is total power, in all REs, of PSSCH transmission on an antenna port of the UE, and may be obtained by a higher layer filter by using an sl-FilterCoefficient configuration. *higher layer filtered RSRP* is an RSRP value, and is an RSRP value obtained by the UE by using an sl-FilterCoefficient filter configuration based on a PSSCH DMRS reference signal in PSSCH transmission. The value is reported to a transmit-end UE of the PSSCH.

For example, when only the sidelink path loss is considered during the power control and adjustment of the terminal device, a calculation formula for the first transmit power $P'_{\text{PSSCH}}(i, l)$ is as follows:

$$P'_{\text{PSSCH}}(i,l) = min\left(P_{\text{CMAX}}, P_{\text{MAX,CBR}}, min\left(P_{\text{PSSCH,D}}(i), P'_{\text{PSSCH,SL}}(i,l)\right)\right) \text{ (dBm)}.$$

$P_{\text{PSSCH,D}}(i)$ is a calculated power value, namely, a first power value, obtained on the first transmission occasion *i* based on the downlink path loss. When a dl-P0-PSSCH-PSCCH parameter is provided:

$$P_{\text{PSSCH,D}}(i) = P_{O,D} + 10\,log_{10}\left(2^{\mu} * M_{\text{RB}}^{\text{PSSCH}}(i)\right) + \alpha_D * PL_D \text{ (dBm);}$$

or

otherwise, $P_{PSSCH,D}(i) = min(P_{CMAX}, P_{MAX,CBR})$ (dBm).

In the formula, $P_{CMAX}$ is maximum sidelink transmit power of a UE. $P_{MAX,CBR}$ is determined based on an sl-MaxTxPower parameter. The value is related to a priority of PSSCH transmission and a CBR range. A value of $P_{O,D}$ is a value of dl-P0-PSSCH-PSCCH. If dl-Alpha-PSSCH-PSCCH is provided, $\alpha_D$ is a value provided by dl-Alpha-PSSCH-PSCCH; or otherwise, $\alpha_D = 1$. $PL_D$ represents downlink transmission loss estimated by the UE based on a reference signal, and $M_{RB}^{PSSCH}(i)$ represents a quantity of RBs allocated to PSSCH transmission at a transmission moment i.

$P'_{PSSCH,SL}(i, l)$ is a fourth power value obtained on the first transmission occasion $i$ based on the sidelink path loss by using an adjustment value corresponding to an index $l$. When an sl-P0-PSSCH-PSCCH parameter is provided, and a cast type in an SCI format indicates a unicast type, or a 2nd-stage SCI format is SCI-2C:

$$P'_{PSSCH,SL}(i,l) = P_{O,SL} + 10\,log_{10}\left(2^\mu * M_{RB}^{PSSCH}(i)\right) + \alpha_{SL} * PL_{SL} + f(i,l) \text{ (dBm)};$$

or

otherwise, $P'_{PSSCH,SL}(i, l) = min(P_{CMAX}, P_{PSSCH,D}(i))$ (dBm).

In the formula, $f(i, l)$ is the first adjustment value.

It should be understood that $f(i, l)$ may alternatively be replaced with the second adjustment value $f_2(i, l)$. To be specific, the fourth power value is determined based on the second adjustment value and the second power value.

For example, when both the downlink path loss and the sidelink path loss are considered during the power control and adjustment of the terminal device, a calculation formula for the first transmit power $P'_{PSSCH}(i, l)$ is as follows:

$$P'_{PSSCH}(i,l) = min\left(P_{CMAX}, P_{MAX,CBR}, min\left(P'_{PSSCH,D}(i,l), P'_{PSSCH,SL}(i,l)\right)\right) \text{ (dBm)};$$

or

the formula may be expressed as follows:

$$P'_{PSSCH}(i,l) = min\left(P_{CMAX}, P_{MAX,CBR}, min\left(P_{PSSCH,D}(i), P_{PSSCH,SL}(i)\right) + f(i,l)\right) \text{ (dBm)}.$$

$P'_{PSSCH,D}(i, l)$ is a third power value obtained on a first transmission occasion $i$ based on the downlink path loss by using an adjustment value corresponding to an index $l$. For a manner of calculating $P'_{PSSCH,D}(i, l)$, refer to the calculation manner in the foregoing examples. Details are not described herein again.

$P'_{PSSCH,SL}(i, l)$ is a fourth power value obtained on the first transmission occasion $i$ based on the sidelink path loss by using the adjustment value corresponding to the index $l$. For a manner of calculating $P'_{PSSCH,SL}(i, l)$, refer to the calculation manner in the foregoing examples. Details are not described herein again.

With reference to the first aspect, in some implementations of the first aspect, the method further includes: The first terminal device determines, based on the first transmit power, third transmit power and fourth transmit power that correspond to the first transmission occasion, where the third transmit power and the fourth transmit power correspond to different RBs. The first terminal device sends sidelink information to the second terminal device on the first transmission occasion at the third transmit power. The first terminal device sends sidelink control information to the second terminal device on the first transmission occasion at the fourth transmit power.

For example, when the first terminal device sends both a PSSCH and a PSCCH on a transmission occasion $i$, PSSCH transmit power $P'_{PSSCH2}(i)$, namely, the third transmit power, may be expressed by using the following formula:

$$P'_{PSSCH2}(i) = 10\,log_{10}\left(\frac{M_{RB}^{PSSCH}(i) - M_{RB}^{PSCCH}(i)}{M_{RB}^{PSSCH}(i)}\right) + P'_{PSSCH}(i) \text{ (dBm)};$$

and

a UE determines, at a PSCCH-PSSCH transmission moment i, transmit power of PSCCH transmission, namely, the fourth transmit power, according to the following formula:

$$P'_{\text{PSCCH}}(i) = 10log_{10}\left(\frac{M_{\text{RB}}^{\text{PSCCH}}(i)}{M_{\text{RB}}^{\text{PSSCH}}(i)}\right) + P'_{\text{PSSCH}}(i) \text{ (dBm)},$$

where

$M_{\text{RB}}^{\text{PSCCH}}(i)$ represents a quantity of RBs allocated to the PSCCH transmission on the transmission occasion $i$, and

$M_{\text{RB}}^{\text{PSSCH}}(i)$ represents a quantity of RBs allocated to PSSCH transmission on the transmission occasion $i$.

It should be understood that, because three expressions of the first transmit power $P'_{\text{PSSCH}}(i)$ are mentioned in the foregoing implementations, $P'_{\text{PSSCH2}}(i)$ may also be correspondingly extended into three possible corresponding expressions based on the three expressions of $P'_{\text{PSSCH}}(i)$. Details are not described herein again.

For example, the first adjustment value is any adjustment value in the first set, and the first set includes a plurality of adjustment values in a predefined adjustment value set. In this case, for a transmission occasion $i$, when both a PSCCH and a PSSCH are sent on the same transmission occasion, third transmit power $P'_{\text{PSSCH2}}(i, l)$ of the PSSCH may be expressed based on the corresponding transmission occasion $i$ by using an adjustment value corresponding to an index $l$ in the following formula:

$$P'_{\text{PSSCH2}}(i, l) = 10log_{10}\left(\frac{M_{\text{RB}}^{\text{PSSCH}}(i) - M_{\text{RB}}^{\text{PSCCH}}(i)}{M_{\text{RB}}^{\text{PSSCH}}(i)}\right) + P'_{\text{PSSCH}}(i, l) \text{ (dBm)};$$

and

a UE determines, at a PSCCH-PSSCH transmission moment i, fourth transmit power of PSCCH transmission according to the following formula:

$$P'_{\text{PSCCH}}(i, l) = 10log_{10}\left(\frac{M_{\text{RB}}^{\text{PSCCH}}(i)}{M_{\text{RB}}^{\text{PSSCH}}(i)}\right) + P'_{\text{PSSCH}}(i, l) \text{ (dBm)},$$

where

$M_{\text{RB}}^{\text{PSCCH}}(i)$ represents a quantity of RBs allocated to the PSCCH transmission on the transmission occasion $i$, and

$M_{\text{RB}}^{\text{PSSCH}}(i)$ represents a quantity of RBs allocated to the PSSCH transmission on the transmission occasion $i$.

It should be understood that, because three implementations of the first transmit power $P'_{\text{PSSCH}}(i, l)$ are mentioned in the foregoing implementations, $P'_{\text{PSCCH}}(i, l)$ may also be correspondingly extended into three possible corresponding expressions based on the three expressions of $P'_{\text{PSSCH}}(i, l)$. Details are not described herein again.

According to a second aspect, a sidelink power control method is provided. The method includes: A network device sends first indication information to a first terminal device, where the first indication information indicates a first adjustment value corresponding to a first transmission occasion, the first transmission occasion corresponds to at least one symbol, the first adjustment value is used for determining first transmit power, and the first transmit power is power at which the first terminal device sends sidelink information to a second terminal device on the first transmission occasion, or the first transmit power is used for determining power at which the first terminal device sends sidelink information to a second terminal device on the first transmission occasion.

Optionally, the first transmission occasion is used for a third terminal device to send uplink information to the network device, or is used for the network device to send downlink information to a third terminal device, where a frequency domain corresponding to the uplink information or the downlink information overlaps a frequency domain corresponding to the sidelink information.

It should be understood that a time-frequency resource used for uplink transmission may completely or partially overlap a time-frequency resource used for sidelink transmission; or a time-frequency resource used for downlink transmission may completely or partially overlap a time-frequency resource used for sidelink transmission; or the network device simultaneously performs uplink information transmission with the third device and performs downlink information transmission with a fourth device, where a time-frequency resource used for sidelink transmission may completely or partially overlap a time-frequency resource used for the uplink transmission, and the time-frequency resource used for the sidelink transmission may completely or partially overlap a time-frequency resource used for the downlink transmission.

EP 4 654 708 A1

Optionally, the first indication information is carried in RRC signaling or DCI signaling.

With reference to the second aspect, in some implementations of the second aspect, the first transmit power is determined by the first terminal device based on a third power value and/or a fourth power value. The third power value is determined by the first terminal device based on the first adjustment value and a first power value. The fourth power value is determined by the first terminal device based on the first adjustment value and a second power value, or the fourth power value is determined by the first terminal device based on a second adjustment value and a second power value that correspond to the first transmission occasion, where the second adjustment value is indicated by the first indication information. The first power value is determined by the first terminal device based on a first indicated power value, downlink transmission loss, and a quantity of resource blocks RBs, where the first indicated power value and the downlink transmission loss are determined by the first terminal device, and the RB is used for sending sidelink information on the first transmission occasion. The second power value is determined by the first terminal device based on a second indicated power value, sidelink transmission loss, and the quantity of RBs, where the second indicated power value and the sidelink transmission loss are determined by the first terminal device.

With reference to the second aspect, in some implementations of the second aspect, the first adjustment value is any adjustment value in a first set, the first set includes at least one adjustment value in a predefined adjustment value set, the second adjustment value is any adjustment value in a second set, and the second set includes at least one adjustment value in a predefined adjustment value set.

With reference to the second aspect, in some implementations of the second aspect, the first adjustment value is equal to a sum of at least one adjustment value in a first set and a third adjustment value, the first set includes at least one adjustment value in a predefined adjustment value set, the second adjustment value is equal to a sum of at least one adjustment value in a second set and a fourth adjustment value, the second set includes at least one adjustment value in a predefined adjustment value set, the third adjustment value and the fourth adjustment value correspond to a second transmission occasion, the second transmission occasion corresponds to at least one symbol, the third adjustment value is used for determining second transmit power or both the third adjustment value and the fourth adjustment value are used for determining second transmit power, the first terminal device sends sidelink information to the second terminal device on the second transmission occasion at the second transmit power, and the second transmission occasion is earlier than the first transmission occasion.

It should be understood that a power adjustment value may take effect in two manners. In one manner, the adjustment value directly takes effect on power control, to be specific, an absolute adjustment value of the adjustment value is delivered in indication information. In the other manner, the adjustment value takes effect on power control together with a historical adjustment value, to be specific, a relative adjustment value of the adjustment value is delivered in indication information.

It should be understood that the first set or the second set may include only one adjustment value, and the adjustment value is any value in a predefined adjustment value set. For example, the first set may include only $f(i)$, and $f(i)$ is any value corresponding to the first transmission occasion $i$ in a predefined adjustment value set (for example, a predefined value correspondence table).

It should be understood that the first set or the second set may include a plurality of adjustment values, and the plurality of adjustment values are any values in a predefined adjustment value set. Any one of the plurality of adjustment values may be determined as the first adjustment value or the second adjustment value based on an index value $l$. The index value $l$ may be determined by the first terminal device or indicated by the network device. For example, the first set may include a plurality of adjustment values, and the first adjustment value may be $f(i, l)$, to be specific, an adjustment value determined based on a corresponding first transmission occasion $i$ and a corresponding index value $l$ in the first set.

With reference to the second aspect, in some implementations of the second aspect, the network device determines the first transmit power based on at least one of first path loss, second path loss, third path loss, fourth path loss, fifth path loss, sixth path loss, a first signal to interference plus noise ratio SINR and/or a second SINR, air interface transmit power, and noise power. The first path loss is signal propagation power loss between the network device and the third terminal device. The second path loss is signal propagation power loss between the first terminal device and the third terminal device. The third path loss is signal propagation power loss between the first terminal device and the second terminal device. The fourth path loss is signal propagation power loss between the second terminal device and the network device. The fifth path loss is signal propagation power loss between the second terminal device and the third terminal device. The sixth path loss is signal propagation power loss between the network device and the first terminal device. The first SINR, the second SINR, and the noise power are determined by the network device. The air interface transmit power is power at which the third terminal device sends uplink information to the network device, or the air interface power is power at which the network device sends downlink information to the third terminal device.

It should be understood that the first SINR is an indicator expected by the network device for correctly receiving and decoding a signal, or the first SINR is an indicator expected by the third terminal device for correctly receiving and decoding a signal.

For example, when a time-frequency resource used for uplink transmission completely or partially overlaps a time-frequency resource used for sidelink transmission, the network device determines the first transmit power $P_{Max2}$ based on the first path loss $\alpha_{PL1}$, the sixth path loss $\alpha_{PL6}$, the first SINR, the air interface transmit power $P_{Max1}$, and the noise power *Noise*1. The first SINR is denoted as X. In this case, the air interface transmit power is power at which the third terminal device sends uplink information to the network device. The first transmit power $P_{Max2}$ satisfies the following formula:

$$\frac{P_{Max1}*\alpha_{PL1}}{P_{Max2}*\alpha_{PL6}+Noise1} \geq X.$$

For example, when a time-frequency resource used for downlink transmission completely or partially overlaps a time-frequency resource used for sidelink transmission, the network device determines the first transmit power $P_{Max2}$ based on the first path loss $\alpha_{PL1}$, the second path loss $\alpha_{PL2}$, the first SINR, the air interface transmit power $P_{Max1}$, and the noise power *Noise2.* The first SINR is denoted as X. In this case, the air interface transmit power is power at which the network device sends downlink information to the first terminal device. The first transmit power $P_{Max2}$ satisfies the following formula:

$$\frac{P_{Max1}*\alpha_{PL1}}{P_{Max2}*\alpha_{PL2}+Noise2} \geq X.$$

It should be understood that the second SINR is an indicator determined by the second terminal device with an expectation to correctly receive and decode a signal.

For example, when a time-frequency resource used for uplink transmission completely or partially overlaps a time-frequency resource used for sidelink transmission, the network device determines the first transmit power $P_{M\alpha x2}$ based on the third path loss $\alpha_{PL3}$, the fifth path loss $\alpha_{PL5}$, the second SINR, the air interface transmit power $P_{Max1}$, and the noise power *Noise3.* The second SINR is denoted as Y. In this case, the air interface transmit power is power at which the first terminal device sends uplink information to the network device. The first transmit power $P_{Max2}$ satisfies the following formula:

$$\frac{P_{Max2}*\alpha_{PL3}}{P_{Max1}*\alpha_{PL5}+Noise3} \geq Y.$$

For example, when a time-frequency resource used for downlink transmission completely or partially overlaps a time-frequency resource used for sidelink transmission, the network device determines the first transmit power $P_{M\alpha x2}$ based on the third path loss $\alpha_{PL3}$, the fourth path loss $\alpha_{PL4}$, the second SINR, the air interface transmit power $P_{Max1}$, and the noise power *Noise3.* The second SINR is denoted as Y. In this case, the air interface transmit power is power at which the network device sends downlink information to the first terminal device. The first transmit power $P_{M\alpha x2}$ satisfies the following formula:

$$\frac{P_{Max2}*\alpha_{PL3}}{P_{Max1}*\alpha_{PL4}+Noise3} \geq Y.$$

According to a third aspect, a sidelink power control method is provided. The method includes: A second terminal device receives second indication information sent by a first terminal device, where the second indication information indicates a third adjustment value corresponding to a third transmission occasion, the third transmission occasion corresponds to at least one symbol, and the third adjustment value is used for determining fifth transmit power. The second terminal device sends sidelink feedback information to the first terminal device on the third transmission occasion at the fifth transmit power.

Optionally, the third transmission occasion is used for a third terminal device to send uplink information to a network device, or is used for a network device to send downlink information to a third terminal device, where a frequency domain corresponding to the uplink information or the downlink information overlaps a frequency domain corresponding to the sidelink feedback information.

It should be understood that a time-frequency resource used for uplink transmission may completely or partially overlap a time-frequency resource used for sidelink transmission; or a time-frequency resource used for downlink transmission may completely or partially overlap a time-frequency resource used for sidelink transmission; or the network device simultaneously performs uplink information transmission with the third device and performs downlink information transmission with a fourth device, where a time-frequency resource used for sidelink transmission may completely or partially overlap a time-frequency resource used for the uplink transmission, and the time-frequency resource used for the sidelink transmission may completely or partially overlap a time-frequency resource used for the downlink transmission.

With reference to the third aspect, in some implementations of the third aspect, the fifth adjustment value is any adjustment value in a third set, and the third set includes at least one adjustment value in a predefined adjustment value set.

With reference to the third aspect, in some implementations of the third aspect, the fifth adjustment value is equal to a sum of at least one adjustment value in a third set and a sixth adjustment value, the third set includes at least one adjustment value in a predefined adjustment value set, the sixth adjustment value corresponds to a fourth transmission occasion, the fourth transmission occasion corresponds to at least one symbol, the sixth adjustment value is used for determining sixth transmit power, the second terminal device sends sidelink feedback information to the first terminal device on the fourth transmission occasion at the sixth transmit power, and the fourth transmission occasion is earlier than the third transmission occasion.

According to a fourth aspect, a sidelink power control method is provided. The method includes: A first terminal device sends sidelink information to a second terminal device based on first transmit power. The first terminal device determines second indication information based on the first transmit power and sidelink transmission loss. The first terminal device sends the second indication information to the second terminal device. The sidelink transmission loss is determined by the first terminal device. The second indication information indicates the second terminal device to determine a fifth adjustment value. The fifth adjustment value is used for determining fifth transmit power. The fifth transmit power is power at which the second terminal device sends sidelink feedback information to the first terminal device.

With reference to the fourth aspect, in some implementations of the fourth aspect, the fifth adjustment value is any adjustment value in a third set, and the third set includes at least one adjustment value in a predefined adjustment value set.

With reference to the fourth aspect, in some implementations of the fourth aspect, the fifth adjustment value is equal to a sum of at least one adjustment value in a third set and a sixth adjustment value, the third set includes at least one adjustment value in a predefined adjustment value set, the sixth adjustment value corresponds to a fourth transmission occasion, the fourth transmission occasion corresponds to at least one symbol, the sixth adjustment value is used for determining sixth transmit power, the sixth transmit power is power at which the second terminal device sends sidelink feedback information to the first terminal device on the fourth transmission occasion, and the fourth transmission occasion is earlier than the third transmission occasion.

According to a fifth aspect, a sidelink power control method is provided. The method includes: A first terminal device receives third indication information sent by a network device, where the third indication information indicates a seventh adjustment value corresponding to a fifth transmission occasion, the fifth transmission occasion corresponds to at least one symbol, and the seventh adjustment value is used for determining seventh transmit power. The first terminal device sends a sidelink synchronization signal block to a second terminal device on the fifth transmission occasion at the seventh transmit power.

Optionally, the fifth transmission occasion is used for a third terminal device to send uplink information to the network device, or is used for the network device to send downlink information to a third terminal device, where a frequency domain corresponding to the uplink information or the downlink information overlaps a frequency domain corresponding to the sidelink synchronization signal block.

It should be understood that a time-frequency resource used for uplink transmission may completely or partially overlap a time-frequency resource used for sidelink transmission; or a time-frequency resource used for downlink transmission may completely or partially overlap a time-frequency resource used for sidelink transmission; or the network device simultaneously performs uplink information transmission with the third device and performs downlink information transmission with a fourth device, where a time-frequency resource used for sidelink transmission may completely or partially overlap a time-frequency resource used for the uplink transmission, and the time-frequency resource used for the sidelink transmission may completely or partially overlap a time-frequency resource used for the downlink transmission.

Optionally, the third indication information is carried in RRC signaling or DCI signaling.

With reference to the fifth aspect, in some implementations of the fifth aspect, the seventh adjustment value is any adjustment value in a fourth set, and the fourth set includes at least one adjustment value in a predefined adjustment value set.

With reference to the fifth aspect, in some implementations of the fifth aspect, the seventh adjustment value is equal to a sum of at least one adjustment value in a fourth set and an eighth adjustment value, the fourth set includes at least one adjustment value in a predefined adjustment value set, the eighth adjustment value corresponds to a sixth transmission occasion, the sixth transmission occasion corresponds to at least one symbol, the sixth adjustment value is used for determining eighth transmit power, the first terminal device sends a sidelink synchronization signal block to the second terminal device on the sixth transmission occasion at the eighth transmit power, and the sixth transmission occasion is earlier than the fifth transmission occasion.

According to a sixth aspect, a sidelink power control method is provided. The method includes: A network device sends third indication information to a first terminal device, where the third indication information indicates a seventh adjustment value corresponding to a fifth transmission occasion, the fifth transmission occasion corresponds to at least one symbol, the seventh adjustment value is used for determining seventh transmit power, and the seventh transmit power is power at which the first terminal device sends a sidelink synchronization signal block to a second terminal device on the fifth transmission occasion.

Optionally, the fifth transmission occasion is used for a third terminal device to send uplink information to the network device, or is used for the network device to send downlink information to a third terminal device, where a frequency domain corresponding to the uplink information or the downlink information overlaps a frequency domain corresponding to the sidelink synchronization signal block.

It should be understood that a time-frequency resource used for uplink transmission may completely or partially overlap a time-frequency resource used for sidelink transmission; or a time-frequency resource used for downlink transmission may completely or partially overlap a time-frequency resource used for sidelink transmission; or the network device simultaneously performs uplink information transmission with the third device and performs downlink information transmission with a fourth device, where a time-frequency resource used for sidelink transmission may completely or partially overlap a time-frequency resource used for the uplink transmission, and the time-frequency resource used for the sidelink transmission may completely or partially overlap a time-frequency resource used for the downlink transmission.

Optionally, the third indication information is carried in RRC signaling or DCI signaling.

With reference to the sixth aspect, in some implementations of the sixth aspect, the seventh adjustment value is any adjustment value in a fourth set, and the fourth set includes at least one adjustment value in a predefined adjustment value set.

With reference to the sixth aspect, in some implementations of the sixth aspect, the seventh adjustment value is equal to a sum of at least one adjustment value in a fourth set and an eighth adjustment value, the fourth set includes at least one adjustment value in a predefined adjustment value set, the eighth adjustment value corresponds to a sixth transmission occasion, the sixth transmission occasion corresponds to at least one symbol, the eighth adjustment value is used for determining eighth transmit power, the eighth transmit power is power at which the first terminal device sends a sidelink synchronization signal block to the second terminal device on the sixth transmission occasion, and the sixth transmission occasion is earlier than the fifth transmission occasion.

According to a seventh aspect, a sidelink power control apparatus is provided, and includes a transceiver unit and a processing unit, configured to support a communication device in performing the functions of the terminal device in the first aspect, the third aspect, the fourth aspect, the fifth aspect, and the implementations of the corresponding aspects. The functions may be implemented by hardware, or may be implemented by hardware executing corresponding software. The hardware or the software includes one or more modules corresponding to the functions.

According to an eighth aspect, a sidelink power control apparatus is provided, and includes a processor and a transceiver, configured to support a communication device in performing corresponding functions in the foregoing methods. The processor and the transceiver are connected through communication. The transceiver is configured to perform specific signal sending/receiving under driving of the processor. The processor is configured to invoke instructions to implement the data transmission method in the first aspect, the third aspect, the fourth aspect, the fifth aspect, and the implementations of the corresponding aspects.

According to a ninth aspect, a sidelink power control apparatus is provided, and includes a transceiver unit and a processing unit, configured to support a communication device in performing the functions of the network device in the second aspect, the sixth aspect, and the implementations of the aspects. The functions may be implemented by hardware, or may be implemented by hardware executing corresponding software. The hardware or the software includes one or more modules corresponding to the functions.

According to a tenth aspect, a sidelink power control apparatus is provided, and includes a processor and a transceiver, configured to support a communication device in performing corresponding functions in the foregoing methods. The processor and the transceiver are connected through communication. The transceiver is configured to perform specific signal sending/receiving under driving of the processor. The processor is configured to invoke instructions to implement the data transmission method in the second aspect, the sixth aspect, and the implementations of the aspects.

According to an eleventh aspect, a communication system is provided. The communication system includes the communication device provided in the seventh aspect or the ninth aspect, and the communication apparatus provided in the eighth aspect or the tenth aspect. The communication system may perform the data transmission method provided in any one of the first aspect to the sixth aspect or the possible implementations of the first aspect to the sixth aspect.

According to a twelfth aspect, a computer-readable storage medium is provided, and is configured to store a computer program. The computer program includes instructions for performing the method in any one of the first aspect to the sixth aspect or the possible implementations of the first aspect to the sixth aspect.

According to a thirteenth aspect, a system chip is provided, and includes a processing unit and a communication unit. For the processing unit, the processing unit may execute computer instructions, to enable a chip in a terminal to perform the method in any one of the first aspect to the sixth aspect or the possible implementations of the first aspect to the sixth aspect.

According to a fourteenth aspect, a computer program product is provided. The product includes instructions for performing the method in any one of the first aspect to the sixth aspect or the possible implementations of the first aspect to the sixth aspect.

According to a fifteenth aspect, a chip system is provided, and includes a memory and a processor. The memory is configured to store a computer program. The processor is configured to invoke the computer program from the memory and run the computer program, to enable a communication device on which the chip system is installed to perform the method in any one of the first aspect to the sixth aspect or the possible implementations of the first aspect to the sixth aspect.

The chip system may include an input circuit or interface for sending information or data, and an output circuit or interface for receiving information or data.

## BRIEF DESCRIPTION OF DRAWINGS

FIG. 1 is a diagram of a communication system to which embodiments of this application are applicable;
FIG. 2 is a diagram of a resource allocation mode for an SL, a UL, and a DL;
FIG. 3 is a diagram of a bitmap indicating subframes available for SL communication;
FIG. 4 is a diagram of frequency resources in a communication resource pool;
FIG. 5 shows a sidelink power control method according to an embodiment of this application;
FIG. 6 is a scenario to which a sidelink power control method is applicable according to an embodiment of this application;
FIG. 7 is a scenario to which another sidelink power control method is applicable according to an embodiment of this application;
FIG. 8 is a scenario to which another sidelink power control method is applicable according to an embodiment of this application;
FIG. 9 shows another sidelink power control method according to an embodiment of this application;
FIG. 10 shows another sidelink power control method according to an embodiment of this application;
FIG. 11 shows another sidelink power control method according to an embodiment of this application;
FIG. 12 shows another sidelink power control method according to an embodiment of this application;
FIG. 13 is a block diagram of a wireless communication apparatus according to an embodiment of this application;
FIG. 14 is a block diagram of a wireless communication apparatus according to an embodiment of this application;
FIG. 15 is a block diagram of a terminal device according to an embodiment of this application; and
FIG. 16 is a block diagram of a network device according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) or new radio (new radio, NR) system, an evolved system after 5G such as a 6th generation (6th generation, 6G) system, and non-terrestrial communication network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may serve as a base station or a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network (Heterogeneous Network, HetNet) scenario, and impose no limitation on transmission points. The technical solutions may be applied to coordinated multi-point transmission between macro base stations, between micro base stations, and between a macro base station and a micro base station, and are applicable to both an FDD system and a TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in vehicle-to-everything, communication in the internet of things, communication in an industrial internet, and the like.

The technical solutions in embodiments of this application are also applicable to a scenario in which a terminal is connected to a single base station. The base station to which the terminal is connected and a core network (core network, CN) to which the base station is connected are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application are also applicable to a macro-micro scenario including different forms of base stations in a communication network. For example, the base station may be a satellite, an air balloon station, or an uncrewed aerial vehicle station. The technical solutions in embodiments of this application are also applicable to a scenario including both a wide-coverage base station and a small-coverage base station.

It can be further understood that the technical solutions in embodiments of this application may be further applied to a wireless communication system after 5.5G and 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device with a wireless transceiver function, and may be specifically a user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine type communication device, a cordless phone, a session initiation protocol (session initiation protocol, SIP) phone, a wireless local loop (wireless local loop, WLL) station, a personal digital assistant (personal digital assistant, PDA), a customer-premises equipment (customer-premises equipment, CPE), a smart point of sale (point of sale, POS) machine, a handheld device with a wireless communication function, a computing device or another processing device connected to a wireless modem, a vehicle-mounted device, a communication device mounted on a high-altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, a communication apparatus configured to implement a function of the terminal device may be a terminal device, or may be an apparatus that can support the terminal device in implementing the function, for example, a chip system. The apparatus may be mounted in the terminal device or used with the terminal device. In embodiments of this application, the chip system may include a chip, or may include a chip and another discrete component.

The network device in embodiments of this application is a device with a wireless transceiver function, and is configured to communicate with the terminal device. An access network device may be a node in a radio access network (radio access network, RAN), and may also be referred to as a base station, or may be referred to as a RAN node. The access network device may be an evolved NodeB (evolved NodeB, eNB or eNodeB) in LTE, a base station in a 5G network such as a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), or a cloud access network (cloud radio access network, C-RAN).

The network device in embodiments of this application may alternatively include base stations in various forms, for example, a macro base station, a micro base station (also referred to as a small cell), a relay station, a transmission and reception point (transmission and reception point, TRP), a transmission point (transmission point, TP), a mobile switching center, a device that performs a base station function in device-to-device (device-to-device, D2D), vehicle-to-everything (vehicle-to-everything, V2X), or machine-to-machine (machine, M2M) communication, and a network device in an NTN communication system. This is not specifically limited in embodiments of this application.

The network device in embodiments of this application may alternatively include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio processing unit (remote radio unit, RRU), a pico remote radio unit (pico remote radio unit, pRRU), an active antenna processing unit (active antenna unit, AAU), or another unit, module, or device with a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be a network device, or may be an apparatus that can support the network device in implementing the function, for example, a chip system. The apparatus may be mounted in the network device or used with the network device. In embodiments of this application, the chip system may include a chip, or may include a chip and another discrete component.

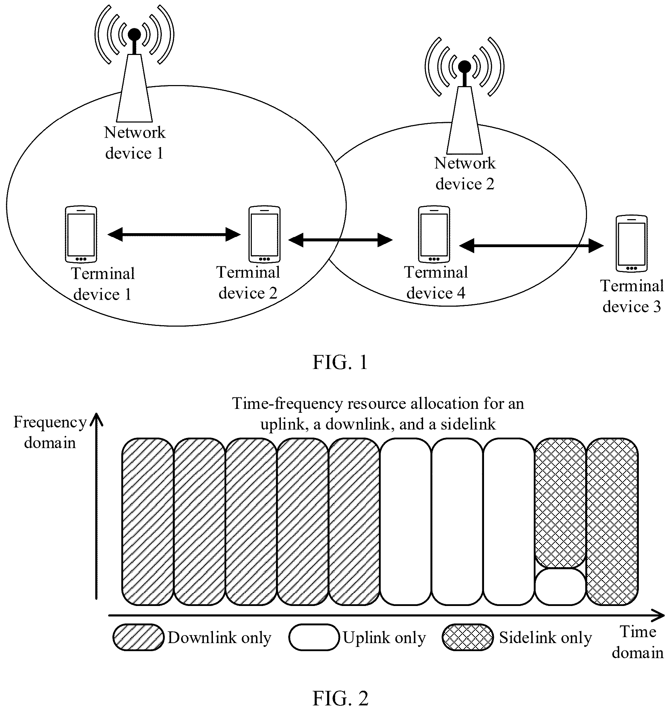

FIG. 1 is a diagram of a communication system to which embodiments of this application are applicable.

As shown in FIG. 1, a power control method provided in embodiments of this application may be applied to a system in which an SL and Uu coexist, for example, direct communication between terminals, vehicle-to-everything, or cellular communication (including 5G NR communication and LTE), and is also applicable to interference measurement between other inter-RAT systems. Embodiments of this application support a communication scenario with network coverage. When there is network coverage, terminal devices, for example, a terminal device 1 and a terminal device 2, may perform communication through a sidelink (sidelink). Alternatively, terminal devices within coverage areas of different network apparatuses may perform communication. For example, the terminal device 2 is within a coverage area of a network device 1, a terminal device 4 is within a coverage area of a network device 2, and the terminal device 2 may perform sidelink communication with the terminal device 4. Alternatively, a terminal device within a coverage area of a network device may perform sidelink communication with a terminal device beyond a coverage area. For example, the terminal device 4 within the coverage area of the network device 2 may perform sidelink communication with a terminal device 3 beyond a network coverage area.

Terminal devices may communicate with each other through scheduling by a base station. This resource scheduling mode may be referred to as a mode 1. Alternatively, terminal devices may perform communication not in the base station scheduling mode, and may autonomously select a resource, to be specific, select, from a resource pool, a resource used for sidelink communication. This resource scheduling mode may be referred to as a mode 2.

It should be understood that the resource in embodiments of this application is a time-frequency resource. A spectrum used for sidelink communication may be an unlicensed frequency band, a licensed frequency band, and/or a dedicated frequency band. Before transmission is performed by using an unlicensed frequency band, channel access, for example, listen before talk (Listen Before Talk, LBT), needs to be performed according to a requirement of local regulations.

It should be understood that a quantity of terminal devices and a quantity of network devices shown in FIG. 1 are merely examples, and a quantity of terminal devices and a quantity of network devices in a communication system are not limited in this application.

For ease of understanding embodiments of this application, concepts and technologies in embodiments of this application are first briefly described.

It should be understood that related terms and descriptions below are applicable to all embodiments in this specification. Different embodiments may be used independently, or may be used in combination based on some internal or external relationships. Different implementations in embodiments may be used independently or in combination.

1. Device-to-device D2D technology

The D2D technology is a technology of direct communication between two user equipments or more user equipments UEs. Typical D2D devices include a Bluetooth device, a Wi-Fi Direct device, and the like. In a wireless communication network defined by the 3GPP, an air interface (Air Interface) for direct communication between users is PC5, which is therefore also referred to as PC5 communication. From a perspective of a link, a link for direct communication between users is defined as a sidelink, which may also be referred to as sidelink communication and corresponds to an uplink (Uplink, UL) and a downlink (Downlink, DL) in a current communication system.

The sidelink communication includes a plurality of use scenarios, typically, for example, vehicle-to-everything (Vehicle-to-everything, V2X) and communication between intelligent terminals. The vehicle-to-everything V2X is communication between a vehicle and another vehicle or a device that may affect the vehicle, and includes vehicle-to-vehicle (Vehicle-to-Vehicle, V2V) communication, vehicle-to-pedestrian (Vehicle-to-Pedestrian, V2P) communication, vehicle-to-infrastructure (Vehicle-to-Infrastructure, V2I) communication, and vehicle-to-network (Vehicle-to-Network, V2N) communication. The communication between intelligent terminals is typically, for example, communication between a mobile phone and a wearable device, communication between an AR/VR helmet or glasses and a smart screen, and communication between sensors.

Currently, the 3GPP has defined two frequency bands directly associated with the V2X: n38 (2570 MHz to 2620 MHz) and n47 (5855 MHz to 5925 MHz). For the n38 frequency band, when this frequency band is used to support a V2X SL service, this frequency band is dedicated for NR V2X in a specific area. The n47 frequency band is usually known as an intelligent traffic system (Intelligent Traffic System, ITS) frequency band, and currently, no related network device is deployed on this frequency band. The ITS is an advanced application intended to provide innovative services related to different transportation modes and traffic management, to enable a user to better understand a situation, and make use of a transportation network safer, more coordinated, and "more intelligent". Different countries have different deployment policies for division of this frequency band.

In addition to the foregoing two frequency bands, currently, a technology for an SL system on a shared spectrum is currently under research in R18, and the shared spectrum includes frequency bands n46, n96, and n102. A plurality of types of terminal devices exist on the shared frequency band. Therefore, to avoid collision and interference between different users, a transmission node needs to use a spectrum resource through contention, for example, contend for a channel through LBT. The LBT mechanism is essentially a channel access rule based on random back-off (random back-off). Before accessing a channel and starting to send data, a UE needs to sense (sense) whether the channel is idle (idle). If the channel has remained idle for a specific period of time, the UE can occupy the channel. If the channel is not idle, the UE can occupy the channel only after the channel is restored to being idle.

In terms of the technologies and planning described above, deployment/planning of different countries and vendors for a 5.9G frequency band is currently mature. The European Union has allocated 5855 MHz to 5875 MHz and 5875 MHz to 5925 MHz (5.9 GHz band) to the ITS. China has allocated 20 MHz (5905 MHz to 5925 MHz) in the ITS spectrum to direct communication based on an LTE-V2X technology.

In addition, a device used in the D2D technology is usually a half-duplex device. To be specific, the UE can be only in a state of sending information or receiving information at one moment, and is incapable of simultaneously performing sending and receiving.

2. Resource

Specifically, the resource may be a time domain resource, a frequency domain resource, or a time-frequency resource. According to the standard NR protocol Rel-16/Rel-17, a scheduling granularity of a physical sidelink control channel PSCCH (physical sidelink control channel, PSCCH) or a physical sidelink shared channel (physical sidelink shared channel, PSSCH) is measured in a unit of one slot in time domain, and is measured in a unit of one or more continuous subchannels in frequency domain. A sending terminal device may send a sidelink signal on the resource. One resource may carry three types of channels, that is, a PSCCH, a PSSCH, and a physical sidelink feedback channel (physical sidelink feedback channel, PSFCH), and signals such as a demodulation reference signal (demodulation reference signal, DM-RS) and a channel state information reference signal (channel state information reference signal, CSI-RS). The PSCCH carries 1st-stage sidelink control information (sidelink control information, SCI), the PSSCH carries 2nd-stage SCI and data, and the PSFCH carries feedback information, including HARQ-ACK feedback information and collision indication information. PSCCH/PSSCH includes the PSCCH and/or the PSSCH.

3. Time unit and frequency domain unit

A time domain resource includes a symbol (symbol), a slot (slot), a mini-slot (mini-slot), a partial slot (partial slot), a subframe (subframe), a radio frame (frame), a sensing slot (sensing slot), and the like.

A frequency domain resource includes a resource element (resource element, RE), a resource block (resource block, RB), an RB set (RB set), a subchannel (subchannel), a resource pool (resource pool), a bandwidth part (bandwidth part, BWP), a carrier (carrier), a channel (channel), an interlace (interlace), and the like.

4. Signal to interference plus noise ratio (signal to interference plus noise ratio, SINR)

The signal to interference plus noise ratio is a main technical indicator for measuring communication quality of a communication system. Generally, a larger signal to interference plus noise ratio indicates better communication quality.

$$SINR = \frac{S}{I + N},$$

where

S represents signal power, I represents interference power, and N represents noise power.

5. Resource pool (resource pool)

The resource pool is a set of time-frequency resources. For example, the resource pool is a set of time-frequency resources in sidelink that are used by a terminal device to transmit or receive a PSSCH/PSCCH. Different resource pools are distinguished by radio resource control (reference signal received power, RRC) signaling. The terminal device performs reception in a receiving resource pool, and performs sending in a sending resource pool. If resource pools have a same resource pool index, it can be considered that time-frequency resources in the resource pools completely overlap. In an SL mode 1, a base station schedules, for a UE, a resource for transmission. In an SL mode 2, a UE autonomously selects a resource from a resource pool according to a specific rule.

In SL-U, a frequency band is shared by terminal devices in a plurality of forms. For example, an SL terminal device, a Wi-Fi terminal device, and a Bluetooth terminal device perform transmission on a same frequency band.

Bandwidth of a resource pool may be at least one of {5, 10, 15, 20, 25, 30, 40, 50, 60, 70, 80, 90, 100} MHz.

The following describes a relationship between a resource pool and a channel. Bandwidth of the resource pool is $C \times 20$ MHz, where C is a positive integer, for example, C={1, 2, 3, 4, 5}. The resource pool includes at least one channel. For example, the resource pool includes one channel, channel bandwidth is 20 MHz, and the bandwidth of the resource pool is 20 MHz. For another example, the resource pool includes two channels, channel bandwidth is 20 MHz, and the bandwidth of the resource pool is 40 MHz. For another example, the resource pool includes five channels, channel bandwidth is 20 MHz, and the bandwidth of the resource pool is 100 MHz.

In an existing resource allocation solution, a numerology (numerology) of an SL BWP and a numerology of a UL BWP in an active state should be the same and on a same carrier of a same cellular network. When the numerology of the SL BWP is different from the numerology of the UL BWP, the SL BWP is in an inactive state. A time-frequency resource for the SL and a time-frequency resource for cellular network communication are semi-statically isolated. The semi-static isolation between the SL and the UL may be implemented through configuration of a resource pool. FIG. 2 is a diagram of a resource allocation mode for an SL, a UL, and a DL. As shown in FIG. 2, time-frequency resources for the SL, the DL, and the UL may be isolated through signaling configuration or resource indication, to avoid mutual interference.

It should be understood that, in embodiments of this application, the configuration may be: performing configuration based on at least one of RRC configuration, DCI indication, SCI indication, media access control-control element (MAC-CE) indication, or predefinition.

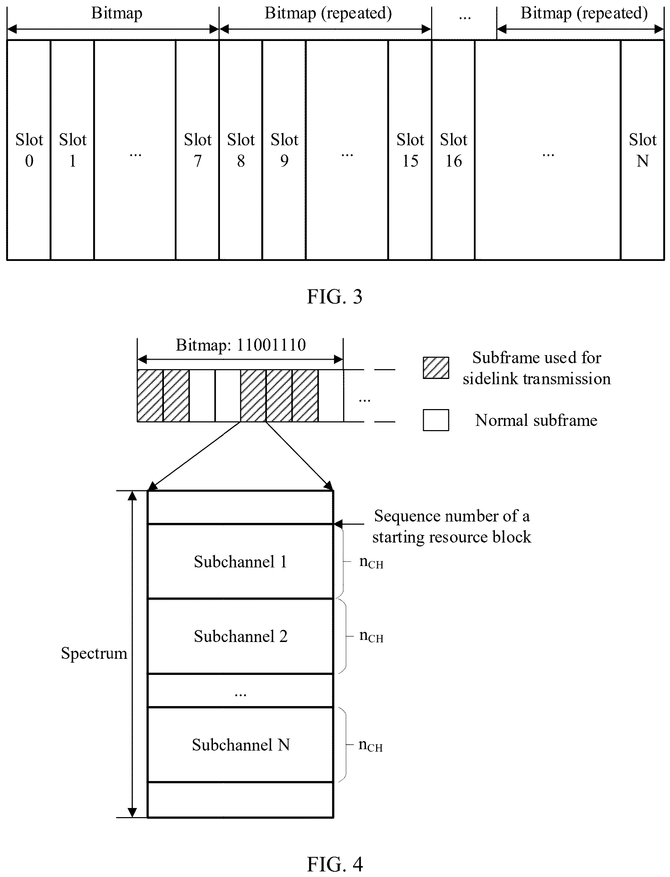

A time-frequency resource for SL communication is configured based on an SL communication resource pool. The SL communication resource pool may be considered as a set of time resources and frequency resources used for SL communication. For the time resources, slots in the SL resource pool conform to a periodicity of 10240 ms. First, a terminal may obtain numbers of slots within the 10240 ms based on a system frame number (system frame number) or a direct frame number (direct frame number), and then exclude an S-SSB slot, a downlink slot, and a reserved slot (reserved slot) from the slots. After the foregoing rule is applied, these physical slots are renumbered, and are arranged into logical slots in ascending order of slot indexes. Then the UE may obtain, based on a configured bitmap, a slot resource that can actually be used for SL communication from the logical slots. In addition, the bitmap is periodically repeated within the 10240 ms, to indicate a set of slots used for SL communication among all slots in a system. FIG. 3 is a diagram of a bitmap indicating slots available for SL communication. A length of the bitmap is 8 bits. As shown in FIG. 3 and FIG. 4, a quantity of symbols occupied by SL transmission in each slot is fixed at M symbols, and M is defined as one piece of SL time domain transmission duration or one time domain transmission unit.

For the frequency resources in the SL communication resource pool, a base station divides a frequency band used for SL communication into several subchannels, and each subchannel includes a specific quantity of resource blocks, for example, 10, 12, 15, 20, 25, 50, 75, or 100 physical resource blocks (Physical resource block, PRB). FIG. 4 is a diagram of frequency resources in a communication resource pool. A base station indicates a sequence number of the 1st resource block of a frequency resource used for SL communication, a total quantity N of subchannels included in the communication resource pool, and a quantity $n_{CH}$ of resource blocks included in each subchannel. One SL transmission may occupy one or more subchannels. During scheduling of an SL communication resource, scheduling in frequency domain is performed at a subchannel granularity.

It should be understood that an SL and Uu (semi-)statically coexist through configuration of a resource pool, and mutual interference between a UL time-frequency resource and an SL time-frequency resource is avoided in a frequency division multiplexing (Frequency division multiplexing, FDM) form.

For brevity of description below, Table 1 shows abbreviations of technical terms that may appear in the following descriptions. Acronyms and abbreviations used in this specification are corresponding terms listed below, unless otherwise specified.

Table 1 Acronyms and abbreviations of technical terms

| | | | |
|---|---|---|---|
| ACK | Acknowledgement | PSBCH | Physical sidelink broadcast channel |
| CBR | Channel busy ratio | PSDCH | Physical sidelink discovery channel |
| CE | Control element | PSCCH | Physical sidelink control channel |
| CSI-RS | Channel state information reference signal | PSFCH | Physical sidelink feedback channel |
| DCI | Downlink control information | PSSCH | Physical sidelink shared data channel |
| DL | Downlink | RB | Resource block |
| DMRS | Demodulation reference signal | RRC | Radio resource control |
| HARQ | Hybrid automatic repeat request | RSRP | Reference signal received power |
| LTE | Long term evolution | SL | Sidelink |
| MAC | Media access control | S-SS | Sidelink synchronization sequence |
| MCS | Modulation and coding scheme | S-SSB | Sidelink synchronization signal and PBCH block |
| NACK | Negative acknowledgement | PBCH | Physical broadcast channel |
| NR | New radio | TPC | Transmit power control |
| PBCH | Physical broadcast channel | UE | User equipment |
| PUSCH | Physical uplink shared data channel | UL | Uplink |

Before the power control method in embodiments of this application is described in detail, a related conventional technology is first described.

According to the conventional technology, in view of interference from SL transmission to the UL, in the case of coexistence in FDM, adjacent-channel interference caused by excessively high SL transmit power is avoided through power control. Power control is specifically performed in the following manner:

First, PUSCH transmit power, corresponding to a numerology configuration index $j$, of a UE on a transmission occasion i may be expressed by using the following formula:

$$P_{PUSCH}(i, j, q_d, l)$$

$$= \min \begin{cases} P_{CMAX}(i), \\ P_{O\_PUSCH}(j) + \alpha_{PUSCH}(j) * PL(q_d) + f(i, l) + 10 * log10(2^u * M_{PUSCH}(i) + \Delta_{TF}(i)) \end{cases}$$

$P_{CMAX}(i)$ is maximum uplink transmit power of the UE on the transmission occasion i. $P_{O\_PUSCH}(j) + \alpha_{PUSCH}(j) * PL(q_d)$ is an open-loop power control part, where $P_{O\_PUSCH}(j)$ is a per-RB received power level expected by a base station. A calculation formula for $P_{O\_PUSCH}(j)$ is as follows:

$$P_{O\_PUSCH}(j) = P_{O\_Nomial\_PUSCH}(j) + P_{O\_UE\_PUSCH}(j).$$

$P_{O\_Nomial\_PUSCH}(j)$ represents a PUSCH transmit power level expected by the base station during normal PUSCH demodulation. $P_{O\_UE\_PUSCH}(j)$ is a power offset of the UE relative to $P_{O\_NOMIAL\_PUSCH}(j)$, and indicates impact of a UE class, a service type, and channel quality on PUSCH transmit power.

$\alpha_{PUSCH}(j)$ is a path loss compensation factor.

$PL(q_d)$ is a downlink path loss value estimated by the UE based on a reference signal index $q_d$, and is measured in a unit of dB. $M_{PUSCH}(i)$ is a PUSCH resource allocated to PUSCH transmission on the transmission occasion $i$, and is measured at an RB granularity.

$\Delta_{TF}(i)$ is power offset values determined based on different modulation and coding scheme (Modulation and Coding Scheme, MCS) classes.

$u$ is a subcarrier width configuration factor, and a subcarrier width is $2^u * 15kHz$.

$f(i, l)$ is a closed-loop power control part, to be specific, an adjustment value of PUSCH transmit power of the UE. A maximum of two closed-loop power control loops are maintained for a PUSCH, that is, $l \in \{0,1\}$. A specific loop to be used may be configured by using a higher-layer parameter powerControlLoopToUse, or may be obtained by using an index in an SRI field in a DCI format 0_1. For the closed-loop power control loop, if a higher-layer parameter tpc-Accumulation is not configured, $f(i, l) = \delta(i, j)$; or otherwise, $f(i, l) = f(i - i_0, l) + \sum_{m=0}^{C(D_i)-1} \delta(m, l)$, and is calculated based on $f(i - i_0, l)$ and a sum of TPC control signaling values received within a period of time before the transmission occasion $i$, where $f(i - i_0, l)$ is an adjustment value determined on a corresponding transmission occasion $i-i_0$, $C(D_i)$ represents a quantity of times that TPC control signaling is received within the period of time before the transmission occasion $i$, and $\delta(m, l)$ is indicated by a DCI format.

For SL link power control, PSSCH power control is as follows:

For SL link power adjustment and control, a calculation formula for transmit power $P_{PSSCH}(i)$ of the UE at a transmission moment $i$ is as follows. The power calculation is used to obtain power in a case in which a PSCCH and a PSSCH are not simultaneously sent on a same PSCCH-PSSCH transmission occasion $i$.

$$P_{\text{PSSCH}}(i) = min\left(P_{\text{CMAX}}, P_{\text{MAX,CBR}}, min\left(P_{\text{PSSCH},D}(i), P_{\text{PSSCH},SL}(i)\right)\right) \text{(dBm)}.$$

$P_{CMAX}$ is maximum sidelink transmit power of the UE.

$P_{MAX,CBR}$ is determined based on an sl-MaxTxPower parameter. The value is related to a priority of PSSCH transmission and a constant bit rate (Constant Bit Rate, CBR) range.

$P_{PSSCH,D}(i)$ is a calculated power value obtained based on downlink path loss. When a dl-P0-PSSCH-PSCCH parameter is provided:

$$P_{\text{PSSCH},D}(i) = P_{\text{O},D} + 10\,log_{10}\left(2^{\mu} * M_{\text{RB}}^{\text{PSSCH}}(i)\right) + \alpha_D * PL_D \text{ (dBm)};$$

or
otherwise:

$$P_{\text{PSSCH},D}(i) = min\left(P_{\text{CMAX}}, P_{\text{MAX,CBR}}\right) \text{ (dBm)}.$$

A value of $P_{O,D}$ is a value of dl-P0-PSSCH-PSCCH. If dl-Alpha-PSSCH-PSCCH is provided, $\alpha_D$ is a value provided by dl-Alpha-PSSCH-PSCCH; or otherwise, $\alpha_D = 1$.

$PL_D$ represents downlink transmission loss estimated by the UE based on a reference signal. $M_{\text{RB}}^{\text{PSSCH}}(i)$ represents a quantity of RBs allocated to PSSCH transmission at the transmission moment $i$.

$\mu$ is a subcarrier width configuration factor, and a subcarrier width is $2^{\mu} * 15kHz$.

$P_{PSSCH,SL}(i)$ is a calculated power value obtained based on sidelink path loss. When an sl-P0-PSSCH-PSCCH parameter is provided, and a cast type in an SCI format indicates a unicast (unicast) type, or a 2nd-stage SCI format is SCI-2C:

$$P_{\text{PSSCH},SL}(i) = P_{\text{O},SL} + 10\,log_{10}\left(2^{\mu} * M_{\text{RB}}^{\text{PSSCH}}(i)\right) + \alpha_{SL} * PL_{SL} \text{ (dBm)};$$

or
otherwise:

$$P_{\text{PSSCH},SL}(i) = min\left(P_{\text{CMAX}}, P_{\text{PSSCH},D}(i)\right) \text{ (dBm)}.$$

A value of $P_{O,SL}$ is a value of sl-P0-PSSCH-PSCCH.

If sl-Alpha-PSSCH-PSCCH is provided, $\alpha_{sl}$ is a value provided by sl-Alpha-PSSCH-PSCCH; or otherwise, $\alpha_{sl} = 1$.

$PL_{SL}$ = *referenceSignalPower - higher layer filtered RSRP* represents the sidelink loss.

*referenceSignalPower* is total power, in all REs, of PSSCH transmission on an antenna port of the UE, and may be obtained by a higher layer filter by using an sl-FilterCoefficient configuration. *higher layer filtered RSRP* is a reference signal received power (Reference Signal Received Power, RSRP) value, and is an RSRP value obtained by the UE by using an sl-FilterCoefficient filter configuration based on a PSSCH DMRS reference signal in PSSCH transmission.

$M_{\text{RB}}^{\text{PSSCH}}(i)$ represents the quantity of RBs allocated to the PSSCH transmission at the transmission moment $i$.

On the transmission occasion *i,* when a PSCCH and a PSSCH are simultaneously sent on a same transmission occasion, PSSCH transmit power $P_{\text{PSSCH2}}(i)$ may be expressed by using the following formula:

$$P_{\text{PSSCH2}}(i) = 10log_{10}\left(\frac{M_{\text{RB}}^{\text{PSSCH}}(i) - M_{\text{RB}}^{\text{PSCCH}}(i)}{M_{\text{RB}}^{\text{PSSCH}}(i)}\right) + P_{\text{PSSCH}}(i) \text{ (dBm)},$$

where

$M_{\text{RB}}^{\text{PSCCH}}(i)$ represents a quantity of RBs allocated to PSCCH transmission on the transmission occasion *i.*

PSCCH power control is as follows:

The UE determines, at a PSCCH-PSSCH transmission moment i, transmit power of PSCCH transmission according to the following formula:

$$P_{\text{PSCCH}}(i) = 10log_{10}\left(\frac{M_{\text{RB}}^{\text{PSCCH}}(i)}{M_{\text{RB}}^{\text{PSSCH}}(i)}\right) + P_{\text{PSSCH}}(i) \text{ (dbm)},$$

where

$M_{\text{RB}}^{\text{PSCCH}}(i)$ represents the quantity of RBs allocated to the PSCCH transmission on the transmission occasion *i,*

$M_{\text{RB}}^{\text{PSSCH}}(i)$ represents a quantity of RBs allocated to PSSCH transmission on the transmission occasion i, and $P_{\text{PSSCH}}(i)$ is calculated based on the formula in the foregoing PSSCH power control part.

S-SS/PSBCH block power control is as follows:

The UE determines, at an S-SS/PSBCH block transmission moment *i,* transmit power of S-SS/PSBCH transmission according to the following formula:

$$P_{\text{S-SSB}}(i) = min\left(P_{\text{CMAX}}, P_{O,S-SSB} + 10\,log_{10}\left(2^{\mu} * M_{\text{RB}}^{\text{S-SSB}}(i)\right) + \alpha_{S-SSB} * \right.$$

$$\left. PL_D\right) \text{ (dBm)},$$

where

$P_{CMAX}$ is maximum sidelink transmit power of the UE.

If a dl-P0-PSBCH parameter is provided and dl-P0-PSBCH indicates a PSBCH power value that is based on downlink path loss, a value of $P_{O,S-SSB}$ is a value provided by dl-P0-PSBCH; or otherwise, $P_{O,S-SSB}(i) = P_{CMAX}$.

If dl-Alpha-PSBCH is provided, $\alpha_{S-SSB}$ is a value provided by dl-Alpha-PSBCH; or otherwise, $\alpha_{S-SSB} = 1$.

$PL_D$ represents downlink transmission loss estimated by the UE based on a reference signal. $M_{\text{RB}}^{\text{S-SSB}}$ represents a quantity of RBs allocated to S-SSB transmission on the transmission occasion i. In NR R16/R17 SL, $M_{\text{RB}}^{\text{S-SSB}} = 11$.

$\mu$ is a subcarrier width configuration factor, and a subcarrier width is $2^{\mu}$ * 15*kHz.*

PSFCH power control is as follows:

A quantity of times of PSFCH transmission scheduled for the UE is $N_{\text{sch,TX,PSFCH}}$, including PSFCH transmission used for HARQ-ACK information and PSFCH transmission used for collision indication information. If the UE supports a maximum of $N_{\text{max,PSFCH}}$ times of PSFCH transmission, the UE determines, according to the following formula, that $N_{\text{Tx,PSFCH}}$ times of PSFCH transmission are to be simultaneously performed, where power of each PSFCH transmission is $P_{\text{PSFCH,k}}(i)$, and $1 \leq k \leq N_{\text{Tx,PSFCH}}$.

Case 1:

1. If dl-P0-PSFCH is provided, dl-P0-PSFCH indicates a PSFCH power value that is based on downlink path loss:

$$P_{\text{PSFCH,one}} = P_{O,PSFCH} + 10\,log_{10}(2^{\mu}) + \alpha_{PSFCH} * PL_D \text{ (dBm)}.$$

A value of $P_{O,PSFCH}$ is indicated by dl-P0-PSFCH. If dl-Alpha-PSFCH is provided and dl-Alpha-PSFCH indicates a PSFCH power compensation value that is based on the downlink path loss, $\alpha_{PSFCH}$ is a value provided by dl-Alpha-PSFCH; or otherwise, $\alpha_{PSFCH} = 1$. $PL_D$ represents downlink transmission loss measured based on a reference signal.

1.1 When $N_{sch,TX,PSFCH} \le N_{max,PSFCH}$:

1.1.1 If $P_{PSFCH,one} + 10\ log_{10}(N_{sch,TX,PSFCH}) \le P_{CMAX}$ , where $P_{CMAX}$ is maximum transmit power of the UE, $N_{Tx,PSFCH} = N_{sch,TX,PSFCH}$ , and $P_{PSFCH,k}(i) = P_{PSFCH,one}$.

1.1.2 If $P_{PSFCH,one} + 10\ log_{10}(N_{sch,TX,PSFCH}) > P_{CMAX}$ and if there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH. In this case, $N_{Tx,PSFCH} > \max(1, \sum_{i=1}^{K} M_i)$ . In the case of $1 \le i \le 8$, $M_i$ represents a quantity of times of PSFCH transmission corresponding to HARQ-ACK information with a priority value of $i$. In the case of $i > 8$, $M_i$ represents a quantity of times of PSFCH transmission corresponding to a collision indication with a priority value of $i$-8. $K$ is a maximum value that satisfies a relational expression of

$$P_{PSFCH,one} + 10\ log_{10}(\max(1, \sum_{i=1}^{K} M_i)) \le P_{CMAX}$$ ; or otherwise, $K$=0. That is:

$$P_{PSFCH,k}(i) = \min(P_{CMAX} - 10\ log_{10}(N_{TX,PSFCH}), P_{PSFCH,one})\ (dBm).$$

1.2 When $N_{sch,TX,PSFCH} > N_{max,PSFCH}$:

The UE performs sorting in ascending order based on priority values corresponding to PSFCH transmission, and then selects $N_{max,PSFCH}$ times of PSFCH transmission.

1.2.1 If $P_{PSFCH,one} + 10\ log_{10}(N_{max,PSFCH}) \le P_{CMAX}$, where $P_{CMAX}$ is maximum transmit power of the UE, $N_{Tx,PSFCH} = N_{max,PSFCH}$, and $P_{PSFCH,k}(i) = P_{PSFCH,one}$.

1.2.2 If $P_{PSFCH,one} + 10\ log_{10}(N_{sch,TX,PSFCH}) > P_{CMAX}$ and there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH. In this case, $N_{Tx,PSFCH} > \max(1, \sum_{i=1}^{K} M_i)$ . In the case of $1 \le i \le 8$, $M_i$ represents a quantity of times of PSFCH transmission corresponding to HARQ-ACK information with a priority value of $i$. In the case of $i > 8$, $M_i$ represents a quantity of times of PSFCH transmission corresponding to a collision indication with a priority value of $i$-8. $K$ is a maximum value that satisfies a relational expression of

$$P_{PSFCH,one} + 10\ log_{10}(\max(1, \sum_{i=1}^{K} M_i)) \le P_{CMAX}$$ ; or otherwise, $K$=0. That is:

$$P_{PSFCH,k}(i) = \min(P_{CMAX} - 10\ log_{10}(N_{sch,TX,PSFCH}), P_{PSFCH,one})\ (dBm).$$

Case 2:

2. If dl-P0-PSFCH is not provided:

$$P_{PSFCH,k}(i) = P_{CMAX} - 10 log_{10}(N_{TX,PSFCH})\ (dBm).$$

The UE autonomously determines $N_{Tx,PSFCH}$ times of PSFCH transmission, and a rule of performing determining is as follows: If there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH, to ensure that $N_{Tx,PSFCH} \ge 1$.

It should be understood that, in the foregoing SL power control manner, although interference caused by SL transmission to the UL is considered, only avoidance of adjacent-channel interference caused by excessively high SL transmit power in the case of coexistence in FDM is considered, and strong interference caused by coexistence on a same frequency band is not considered. In addition, in the case of dynamic coexistence of the SL and the DL, interference caused by SL transmission to DL transmission is not considered in the foregoing power control manner.

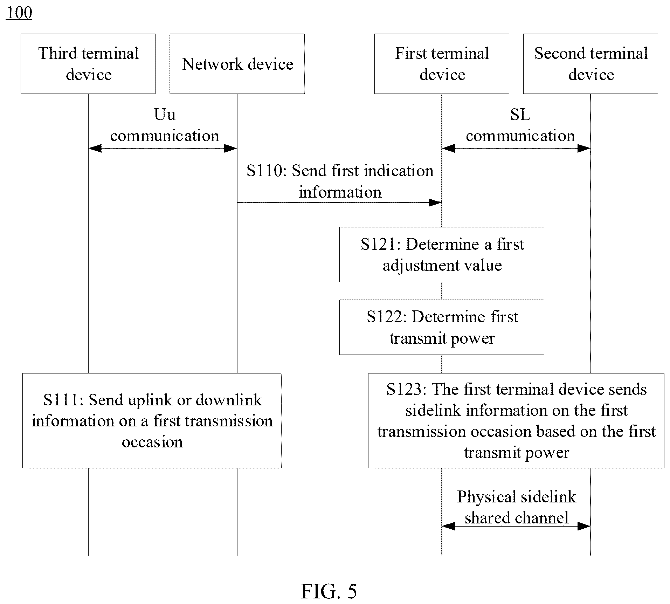

FIG. 5 shows a sidelink power control method 100 according to this application. As shown in FIG. 5:

S110: A network device sends first indication information, and correspondingly, a first terminal device receives the first indication information.

S121: The first terminal device determines, based on the first indication information, a first adjustment value corresponding to a first transmission occasion.

It should be understood that the first transmission occasion corresponds to at least one symbol.

That the first adjustment value corresponds to the first transmission occasion means that, for different transmission occasions i, the terminal device may determine different power adjustment values, namely, the first adjustment value.

Optionally, the first terminal device determines, based on the first indication information, a first adjustment value and a second adjustment value that correspond to a first transmission occasion, where the first adjustment value may be the same as or different from the second adjustment value.

For example, the network device may use DCI signaling, and the DCI signaling may include the first adjustment value, or may include both the first adjustment value and the second adjustment value.

Optionally, in S111, a third terminal device sends uplink information to the network device on the first transmission occasion, or the network device sends downlink information to a third terminal device on the first transmission occasion. A frequency domain corresponding to the uplink information or the downlink information overlaps a frequency domain corresponding to sidelink information sent by the terminal device. In other words, in this case, a time-frequency resource used for sidelink transmission completely or partially overlaps a time-frequency resource used for Uu uplink transmission, or a time-frequency resource used for sidelink transmission completely or partially overlaps a time-frequency resource used for Uu downlink transmission.

It should be understood that, when a same time-frequency resource is used for an SL and a UL or a DL, to ensure that the SL does not cause strong interference to the UL or the DL, SL transmit power should not be excessively high, and adjustment and control need to be performed.

Optionally, the first indication information may be carried in RRC signaling or DCI signaling.

For example, the first indication information may be a TPC command in the DCI signaling.

S122: The first terminal device determines first transmit power based on the first adjustment value.

Optionally, the first terminal device determines first transmit power based on the first adjustment value and the second adjustment value.

Optionally, the first adjustment value may be any adjustment value in a first set, the first set includes at least one adjustment value in a predefined adjustment value set, the second adjustment value is any adjustment value in a second set, and the second set includes at least one adjustment value in a predefined adjustment value set.

Optionally, the first adjustment value is equal to a sum of at least one adjustment value in a first set and a third adjustment value, the first set includes at least one adjustment value in a predefined adjustment value set, the second adjustment value is equal to a sum of at least one adjustment value in a second set and a fourth adjustment value, the second set includes at least one adjustment value in a predefined adjustment value set, the third adjustment value and the fourth adjustment value correspond to a second transmission occasion, the second transmission occasion corresponds to at least one symbol, the third adjustment value is used for determining second transmit power or both the third adjustment value and the fourth adjustment value are used for determining second transmit power, the first terminal device sends sidelink information to a second terminal device on the second transmission occasion at the second transmit power, and the second transmission occasion is earlier than the first transmission occasion.

In other words, a power adjustment value may take effect in two manners. In one manner, the adjustment value directly takes effect on power control, to be specific, an absolute adjustment value of the adjustment value is delivered in indication information, that is, $f(i) = \delta_{abs}(i)$. In the other manner, the adjustment value takes effect on power control together with a historical adjustment value $f(i-i_0)$, where $f(i-i_0)$ is an adjustment value determined on a corresponding transmission occasion $i-i_0$, to be specific, a relative adjustment value of the adjustment value is delivered in indication information, that is,

$$f(i) = f(i-i_0) + \sum_{m=0}^{C(D_i)-1} \delta_{acc}(m)$$ , where $C(D_i)$ represents a quantity of times that TPC control signaling is received within a period of time before a transmission occasion $i$, $\delta_{acc}(m)$ is an adjustment value determined within the period of time before the transmission occasion $i$, and therefore $\sum_{m=0}^{C(D_i)-1} \delta_{acc}(m)$ is a sum of one or more TPC control signaling values received by the terminal device within the period of time before the transmission occasion $i$.

It should be understood that the first set or the second set may include only one adjustment value, and the adjustment value is any value in a predefined adjustment value set. For example, the first set may include only $f(i)$, and $f(i)$ is any value $\delta_{abs}(i)$ corresponding to the first transmission occasion $i$ in a predefined adjustment value set (for example, a predefined value correspondence table).

It should be understood that the first set or the second set may include a plurality of adjustment values, and the plurality of adjustment values are any values in a predefined adjustment value set. Any one of the plurality of adjustment values may be determined as the first adjustment value or the second adjustment value based on an index value $l$. The index value $l$ may be determined by the first terminal device or indicated by the network device. For example, the first set may include a plurality of adjustment values, and the first adjustment value may be $f(i, l)$, to be specific, an adjustment value $\delta_{abs}(i)$ or $\delta_{acc}(i)$ determined based on a corresponding first transmission occasion $i$ and a corresponding index value $l$ in the first set.

In a possible implementation, as shown in Table 2, the network device may deliver the first set by using indication information (for example, TPC). The first set includes at least one power adjustment value in Table 2, and a value of an adjustment value is determined based on an absolute adjustment value or a historical adjustment value.

It should be understood that, in a high-frequency scenario in which communication is performed by using a beam, when a communication link between two parties of a communication pair changes or a communication beam pair needs to be adjusted or an original communication link fails, switching needs to be quickly performed to another set of power control parameters to avoid communication deterioration caused by link deterioration or beam switching. The first set includes a plurality of power adjustment values. In addition, based on a plurality of sets of closed-loop indexed power control parameters, when link switching needs to be performed between the communication pair, efficient switching may be performed based on historically maintained power control index values, to avoid sharp deterioration of communication.

Table 2 Possible manner of determining a value of a power adjustment value

| TPC control field | Absolute value $\delta_{abs}$ or $\delta_{abs1}$ (dB) | Cumulative value $\delta_{acc}$ or $\delta_{acc1}$ (dB) |
|---|---|---|
| 0 | -8 | -4 |
| 1 | -6 | -3 |
| 2 | -4 | -2 |
| 3 | -2 | -1 |
| 4 | 1 | 0 |
| 5 | 4 | 1 |
| 6 | 6 | 2 |
| 7 | 8 | 3 |

S123: The first terminal device sends sidelink information to the second terminal device on the first transmission occasion based on the first transmit power.

It should be understood that the first terminal device performs sidelink communication with the second terminal device, and the first transmit power may be PSSCH transmit power. The first transmit power may be power at which the first terminal device sends the sidelink information to the second terminal device on the first transmission occasion, or the first transmit power may be used for determining power at which the first terminal device sends the sidelink information to the second terminal device on the first transmission occasion.

It should be understood that the first transmit power is adjusted and controlled by the network device. This application provides a possible implementation below. The following implementation is merely an example but not a limitation.

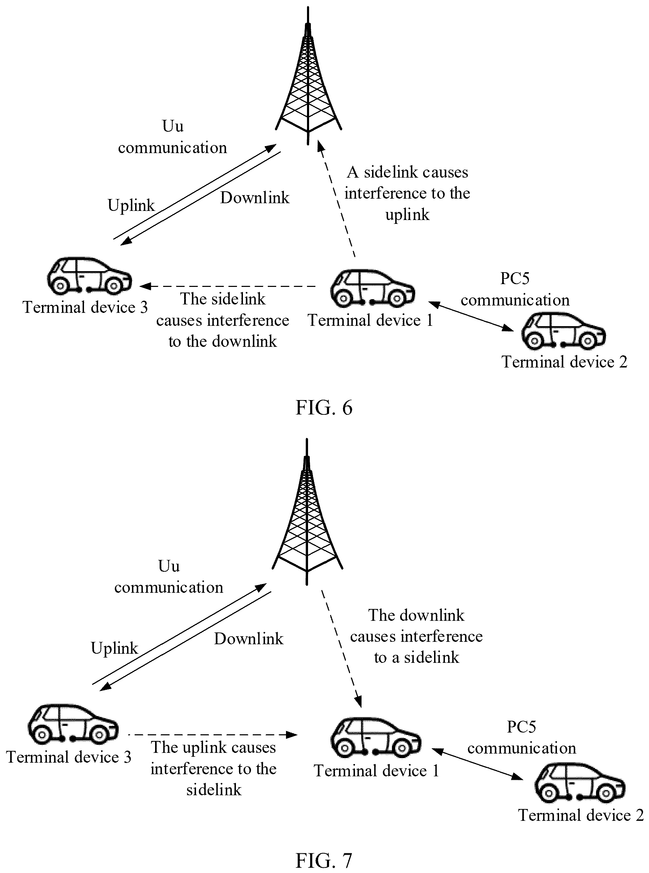

In a possible implementation, the network device sends an appropriate path loss compensation coefficient $\alpha_{PUSCH}$ by using RRC signaling, to ensure both a cell capacity and a rate of a user at a cell edge; and also sends TPC signaling by using DCI, to quickly adjust and control UE transmit power. As shown in FIG. 6 and FIG. 7, when a same time-frequency resource is used for an SL and a UL, to ensure that the SL does not cause strong interference to the UL, SL transmit power should not be excessively high. Similarly, to ensure that UL transmission does not cause interference to the SL, UL transmit power should also be adjusted and controlled. In this case, the network device may deliver TPC control signaling to a sidelink UE by using DCI based on a scheduling result, to control transmit power of the sidelink UE.

The network device determines the first transmit power based on at least one of first path loss, second path loss, third path loss, fourth path loss, fifth path loss, sixth path loss, a first signal to interference plus noise ratio SINR and/or a second SINR, air interface transmit power, and noise power.

The first path loss is signal propagation power loss between the network device and the third terminal device. The second path loss is signal propagation power loss between the first terminal device and the third terminal device. The third path loss is signal propagation power loss between the first terminal device and the second terminal device. The fourth path loss is signal propagation power loss between the second terminal device and the network device. The fifth path loss is signal propagation power loss between the second terminal device and the third terminal device. The sixth path loss is signal propagation power loss between the network device and the first terminal device. The first SINR, the second SINR, and the noise power are determined by the network device. The air interface transmit power is power at which the third terminal device sends uplink information to the network device, or the air interface power is power at which the network device sends downlink information to the third terminal device.

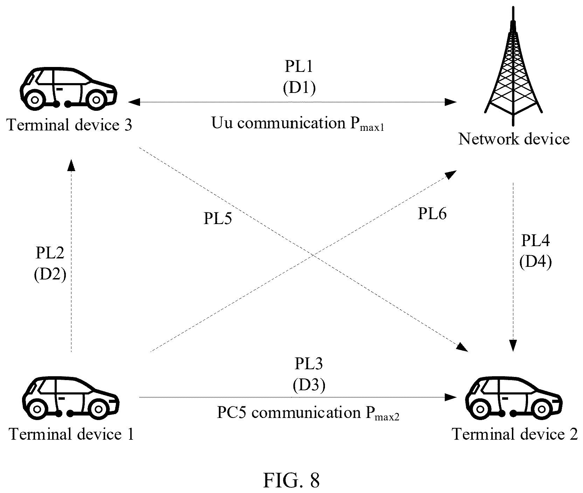

Specifically, when a time-frequency resource used for uplink transmission completely or partially overlaps a time-frequency resource used for sidelink transmission, as shown in FIG. 8, assuming that a terminal device 1 (namely, the first terminal device) and a terminal device 3 (namely, the third terminal device) use a same time-frequency resource to send signals, the terminal device 3 performs uplink transmission, transmit power of the terminal device 3 is $P_{Max1}$, and a distance between the terminal device 3 and a network device is D1, it can be learned, through measurement based on reference signals, that path transmission loss between the terminal device 3 and the network device is $\alpha_{PL1}$ and path loss between the terminal device 1 and the terminal device 3 is $\alpha_{PL2}$. In addition, the terminal device 1 performs sidelink transmission with a terminal device 2 (namely, the second terminal device), transmit power of the terminal device 1 is $P_{Max2}$ (namely, the first transmit power), a distance between the terminal device 1 and the terminal device 2 is D3, path loss between the terminal device 1 and the terminal device 2 is the third path loss $\alpha_{PL3}$, and path loss between the terminal device 1 and the network device is the sixth path loss $\alpha_{PL6}$. If a first SINR expected by the network device for correctly performing receiving and decoding is denoted as X, to ensure that an SL does not cause strong interference to a UL, the network device may adjust the transmit power of the terminal device 1 by using TPC, to ensure that the first transmit power $P_{Max2}$ of the terminal device 1 satisfies the following condition:

$$\frac{P_{Max1} * \alpha_{PL1}}{P_{Max2} * \alpha_{PL6} + Noise1} \geq X,$$

where

$P_{Max1} * \alpha_{PL1}$ represents effective signal received power expected by the network device, $P_{Max2} * \alpha_{PL6}$ represents power of interference caused to the network device by sending sidelink transmission by the terminal device 1 at a same moment, and *Noise1* represents noise power of the network device.

Similarly, to ensure performance of sidelink transmission, assuming that a second SINR expected by the terminal device 2 for correctly performing receiving and decoding is denoted as Y and path loss between the terminal device 2 and the terminal device 3 is the fifth path loss $\alpha_{PL5}$, the transmit power of the terminal device 1 should further satisfy the following condition:

$$\frac{P_{Max2} * \alpha_{PL3}}{P_{Max1} * \alpha_{PL5} + Noise3} \geq Y,$$

where

$P_{Max2} * \alpha_{PL3}$ represents effective signal received power expected by the terminal device 2 (a receive-end UE of sidelink transmission), $P_{Max1} * \alpha_{PL5}$ represents power of interference caused to the terminal device 2 by sending uplink transmission by the terminal device 3 at a same moment, and *Noise3* represents noise power of the terminal device 2.

As shown in FIG. 6 and FIG. 7, when a same time-frequency resource is used for a DL and an SL, the network device may adjust and control transmit power of the network device and transmit power of a sidelink UE, to avoid mutual interference between the network device and the sidelink UE.

Specifically, when a time-frequency resource used for downlink transmission completely or partially overlaps a time-frequency resource used for sidelink transmission, as shown in FIG. 8, if a network device and a terminal device 1 use a same time-frequency resource to send signals, the network device performs downlink transmission with a terminal device 3, transmit power of the network device is $P_{Max1}$, and a distance between the terminal device 3 and the network device is D1, it can be learned, through measurement based on reference signals, that path transmission loss between the terminal device 3 and the network device is $\alpha_{PL1}$ and path loss between the terminal device 1 and the terminal device 3 is $\alpha_{PL2}$. In addition, the terminal device 1 performs sidelink transmission with a terminal device 2, transmit power of the terminal device 1 is $P_{Max2}$, a distance between the terminal device 1 and the terminal device 2 is D3, path loss between the terminal device 1 and the terminal device 2 is $\alpha_{PL3}$, and path loss between the terminal device 2 and the network device is $\alpha_{PL4}$. If a first SINR expected by the terminal device 3 for correctly performing receiving and decoding is denoted as X, to ensure that an SL does not cause strong interference to a DL, the network device may adjust the transmit power of the terminal device 1 by using TPC, to ensure that the transmit power $P_{Max2}$ of the terminal device 1 satisfies the following condition:

$$\frac{P_{Max1}*\alpha_{PL1}}{P_{Max2}*\alpha_{PL2}+Noise2} \geq X,$$

where

$P_{Max1}*\alpha_{PL1}$ represents effective signal received power expected by the terminal device 3, $P_{Max2}*\alpha_{PL2}$ represents power of interference caused to the terminal device 3 by sending sidelink transmission by the terminal device 1 at a same moment, and *Noise2* represents noise power of the terminal device 3.

Similarly, to ensure performance of sidelink transmission, assuming that a second SINR expected by the terminal device 2 for correctly performing receiving and decoding is denoted as Y, the transmit power of the terminal device 1 should further satisfy the following condition:

$$\frac{P_{Max2}*\alpha_{PL3}}{P_{Max1}*\alpha_{PL4}+Noise3} \geq Y,$$

where

$P_{Max2}*\alpha_{PL3}$ represents effective signal received power expected by the terminal device 2 (a receive-end UE of sidelink transmission), $P_{Max1}*\alpha_{PL4}$ represents power of interference caused to the terminal device 2 by sending downlink transmission by the network device at a same moment, and *Noise3* represents noise power of the terminal device 2.

According to this embodiment of this application, the network device may control transmit power of a sidelink UE and transmit power of a UL UE, or control transmit power of a sidelink UE and transmit power of the network device, to avoid impact on decoding performance of the network device and the UEs due to excessively large interference between the sidelink UE and the UL UE or between the sidelink UE and the network device.

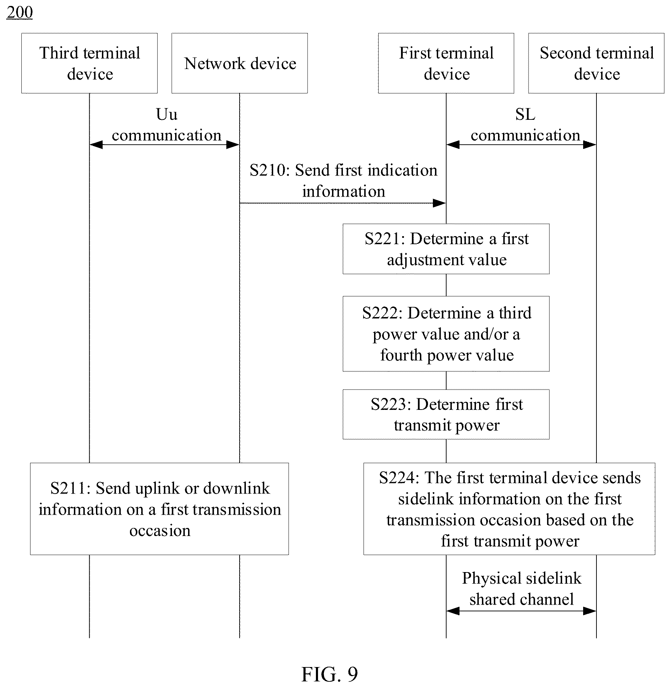

FIG. 9 shows another sidelink power control method 200 according to this application. As shown in FIG. 9:

S210: A network device sends first indication information, and correspondingly, a first terminal device receives the first indication information.

S221: The first terminal device determines, based on the first indication information, a first adjustment value corresponding to a first transmission occasion.

It should be understood that the first transmission occasion corresponds to at least one symbol.

That the first adjustment value corresponds to the first transmission occasion means that, for different transmission occasions i, the terminal device may determine different power adjustment values, namely, the first adjustment value.

Optionally, the first terminal device determines, based on the first indication information, a first adjustment value and a second adjustment value that correspond to a first transmission occasion, where the first adjustment value may be the same as or different from the second adjustment value.

For example, the network device may use DCI signaling, and the DCI signaling may include the first adjustment value, or may include both the first adjustment value and the second adjustment value.

Optionally, in S211, a third terminal device sends uplink information to the network device on the first transmission occasion, or the network device sends downlink information to a third terminal device on the first transmission occasion. A frequency domain corresponding to the uplink information or the downlink information overlaps a frequency domain corresponding to sidelink information sent by the terminal device. In other words, in this case, a time-frequency resource used for sidelink transmission completely or partially overlaps a time-frequency resource used for Uu uplink transmission, or a time-frequency resource used for sidelink transmission completely or partially overlaps a time-frequency resource used for Uu downlink transmission.

It should be understood that, when a same time-frequency resource is used for an SL and a UL or a DL, to ensure that the SL does not cause strong interference to the UL or the DL, SL transmit power should not be excessively high, and adjustment and control need to be performed.

Optionally, the first indication information may be carried in RRC signaling or DCI signaling.

For example, the first indication information may be a TPC command in the DCI signaling.

S222: The first terminal device determines a third power value and/or a fourth power value based on the first adjustment value.

Optionally, the third power value is determined by the first terminal device based on the first adjustment value and a first power value, and the fourth power value is determined by the first terminal device based on the first adjustment value and a second power value.

Optionally, the third power value is determined by the first terminal device based on the first adjustment value and a first power value, and the fourth power value is determined by the first terminal device based on the second adjustment value and a second power value.

Optionally, the first adjustment value may be any adjustment value in a first set, the first set includes at least one adjustment value in a predefined adjustment value set, the second adjustment value is any adjustment value in a second set, and the second set includes at least one adjustment value in a predefined adjustment value set.

Optionally, the first adjustment value is equal to a sum of at least one adjustment value in a first set and a third adjustment value, the first set includes at least one adjustment value in a predefined adjustment value set, the second adjustment value is equal to a sum of at least one adjustment value in a second set and a fourth adjustment value, the second set includes at least one adjustment value in a predefined adjustment value set, the third adjustment value and the fourth adjustment value correspond to a second transmission occasion, the second transmission occasion corresponds to at least one symbol, the third adjustment value is used for determining second transmit power or both the third adjustment value and the fourth adjustment value are used for determining second transmit power, the first terminal device sends sidelink information to a second terminal device on the second transmission occasion at the second transmit power, and the second transmission occasion is earlier than the first transmission occasion.

In other words, a power adjustment value may take effect in two manners. In one manner, the adjustment value directly takes effect on power control, to be specific, an absolute adjustment value of the adjustment value is delivered in indication information, that is, $f(i)=\delta_{abs}(i)$. In the other manner, the adjustment value takes effect on power control together with a historical adjustment value $f(i-i_0)$, namely, the third adjustment value or the fourth adjustment value, where $f(i-i_0)$ is an adjustment value determined on a corresponding transmission occasion $i-i_0$, to be specific, a relative adjustment value of the adjustment value is delivered in indication information, that is, $f(i)=f(i-i_0)+\sum_{m=0}^{C(D_i)-1}\delta_{acc}(m)$, where $C(D_i)$ represents a quantity of times that TPC control signaling is received within a period of time before a transmission occasion $i$, $\delta_{acc}(m)$ is an adjustment value determined within the period of time before the transmission occasion $i$, and therefore $\sum_{m=0}^{C(D_i)-1}\delta_{acc}(m)$ is a sum of one or more TPC control signaling values received by the terminal device within the period of time before the transmission occasion $i$.

The first power value is determined by the first terminal device based on a first indicated power value, downlink transmission loss, and a quantity of resource blocks RBs, where the first indicated power value and the downlink transmission loss are determined by the first terminal device, and the RB is used for sending sidelink information on the first transmission occasion. In other words, the first power value is a calculated power value obtained based on downlink path loss, and the first adjustment value may be used for adjusting the first power value to determine a new power value, namely, the third power value.

It should be understood that the first indicated power value and the downlink transmission path loss may be indicated by the network device to the terminal device by sending indication information, and the terminal device determines the first indicated power value and the downlink transmission path loss based on the indication information.

For example, $P_{PSSCH,D}(i)$ is a calculated power value, namely, a first power value, obtained on a first transmission occasion i based on the downlink path loss. When a dl-P0-PSSCH-PSCCH parameter is provided:

$$P_{\text{PSSCH},D}(i) = P_{\text{O},D} + 10\, log_{10}\left(2^{\mu} * M_{\text{RB}}^{\text{PSSCH}}(i)\right) + \alpha_D * PL_D \text{ (dBm);}$$

or

otherwise, $P_{PSSCH,D}(i) = min(P_{CMAX}, P_{MAX,CBR})$ (dBm).

In the formula, $P_{CMAX}$ is maximum sidelink transmit power of a UE. $P_{MAX,CBR}$ is determined based on an sl-MaxTxPower parameter. The value is related to a priority of PSSCH transmission and a CBR range.

In the formula, a value of $P_{O,D}$ is a value of dl-P0-PSSCH-PSCCH, namely, the first indicated power value. If dl-Alpha-PSSCH-PSCCH is provided, $\alpha_D$ is a value provided by dl-Alpha-PSSCH-PSCCH; or otherwise, $\alpha_D = 1$.

In the formula, $PL_D$ represents downlink transmission loss estimated by the UE based on a reference signal, and $M_{\text{RB}}^{\text{PSSCH}}(i)$ represents a quantity of RBs allocated to PSSCH transmission at a transmission moment i.

To be specific, the value of $P_{O,D}$ and $PL_D$ are determined by the first terminal device, and may be indicated by the network device to the first terminal device by using information in RRC signaling.

The third power value $P'_{PSSCH,D}(i)$ may be obtained by adjusting the first power value $P_{PSSCH,D}(i)$ based on the first adjustment value $f(i)$:

$P'_{PSSCH,D}(i)$ is a calculated power value, namely, a third power value, obtained on the first transmission occasion $i$ based on the downlink path loss. When a dl-P0-PSSCH-PSCCH parameter is provided:

$$P'_{\text{PSSCH},D}(i) = P_{\text{O},D} + 10\, log_{10}\left(2^{\mu} * M_{\text{RB}}^{\text{PSSCH}}(i)\right) + \alpha_D * PL_D + f(i) \text{ (dBm);}$$

or

otherwise, $P'_{\text{PSSCH},D}(i) = \min(P_{\text{CMAX}}, P_{\text{MAX,CBR}})$ (dBm).

In the formula, $f(i)$ is a power adjustment value, namely, the first adjustment value, indicated by the network device on the transmission occasion $i$.

The second power value is determined by the first terminal device based on a second indicated power value, sidelink transmission loss, and the quantity of RBs, where the second indicated power value and the sidelink transmission loss are determined by the first terminal device, and the RB is used for sending sidelink information on the first transmission occasion. In other words, the second power value is a calculated power value obtained based on sidelink path loss, and the first adjustment value may be used as a power adjustment value for adjusting the first power value to obtain a new power value, namely, the fourth power value.

For example, $P_{\text{PSSCH},SL}(i)$ is a calculated power value, namely, a second power value, obtained on the first transmission occasion $i$ based on the sidelink path loss. When an sl-P0-PSSCH-PSCCH parameter is provided, and a cast type in an SCI format indicates a unicast type, or a 2nd-stage SCI format is SCI-2C:

$$P_{\text{PSSCH},SL}(i) = P_{\text{O},SL} + 10\,log_{10}\left(2^{\mu} * M_{\text{RB}}^{\text{PSSCH}}(i)\right) + \alpha_{SL} * PL_{SL} \text{ (dBm);}$$

or

otherwise, $P_{\text{PSSCH},SL}(i) = \min(P_{\text{CMAX}}, P_{\text{PSSCH},D}(i))$ (dBm).

In the formula, a value of $P_{\text{O},SL}$ is a value of sl-P0-PSSCH-PSCCH. If sl-Alpha-PSSCH-PSCCH is provided, $\alpha_{sl}$ is a value provided by sl-Alpha-PSSCH-PSCCH; or otherwise, $\alpha_{sl} = 1$.

In the formula, $PL_{SL}$ = *referenceSignalPower - higher layer filtered RSRP* represents the sidelink loss. *referenceSignalPower* is total power, in all REs, of PSSCH transmission on an antenna port of the UE, and may be obtained by a higher layer filter by using an sl-FilterCoefficient configuration. *higher layer filtered RSRP* is an RSRP value, and is an RSRP value obtained by the UE by using an sl-FilterCoefficient filter configuration based on a PSSCH DMRS reference signal in PSSCH transmission.

To be specific, the value of $P_{\text{O},D}$ and $PL_{SL}$ are determined by the first terminal device, and may be indicated by the network device to the first terminal device by using information in RRC signaling.

In the formula, $M_{\text{RB}}^{\text{PSSCH}}(i)$ represents a quantity of RBs allocated to PSSCH transmission at the transmission moment $i$.

In the formula, $P_{\text{CMAX}}$ is maximum sidelink transmit power of a UE. $P_{\text{MAX,CBR}}$ is determined based on an sl-MaxTxPower parameter. The value is related to a priority of PSSCH transmission and a CBR range.

The fourth power value $P'_{\text{PSSCH},D}(i)$ may be obtained by adjusting the second power value $P_{\text{PSSCH},SL}(i)$ based on the first adjustment value $f(i)$:

$P'_{\text{PSSCH},SL}(i)$ is a calculated power value, namely, a fourth power value, obtained on the first transmission occasion $i$ based on the sidelink path loss. When an sl-P0-PSSCH-PSCCH parameter is provided, and a cast type in an SCI format indicates a unicast type, or a 2nd-stage SCI format is SCI-2C:

$$P'_{\text{PSSCH},SL}(i) = P_{\text{O},SL} + 10\,log_{10}\left(2^{\mu} * M_{\text{RB}}^{\text{PSSCH}}(i)\right) + \alpha_{SL} * PL_{SL} + f(i) \text{ (dBm);}$$

or

otherwise, $P'_{\text{PSSCH},SL}(i) = \min(P_{\text{CMAX}}, P_{\text{PSSCH},D}(i))$ (dBm).

In the formula, $f(i)$ is a power adjustment value, namely, the first adjustment value, indicated by the network device on the transmission occasion $i$.

It should be understood that $f(i)$ may alternatively be replaced with the second adjustment value $f_2(i)$. To be specific, the fourth power value is determined based on the second adjustment value and the second power value.

S223: The first terminal device determines first transmit power based on the third power value and/or the fourth power value.

It should be understood that, for PSSCH power control, power control for an SL UE may be configured into three possibilities: being based only on downlink path loss, being based only on sidelink path loss, and being based on both downlink path loss and sidelink path loss. To be specific, the first terminal device may determine the first transmit power based on the third power value and the second power value, or the first terminal device may determine the first transmit power based on the first power value and the fourth power value, or the first terminal device may determine the first transmit power based on the third power value and the fourth power value.

In a possible implementation, based on the first indication information, the first adjustment value takes effect only on power control in which downlink path loss is used. Specifically, for SL link power adjustment and control, a calculation formula for transmit power $P'_{\mathrm{PSSCH}}(i)$, namely, the first transmit power, of a UE, namely, the first terminal device, at a transmission moment $i$, namely, the first transmission occasion, is as follows:

$$P'_{\mathrm{PSSCH}}(i) = min\left(P_{\mathrm{CMAX}}, P_{\mathrm{MAX,CBR}}, min\left(P'_{\mathrm{PSSCH},D}(i), P_{\mathrm{PSSCH},SL}(i)\right)\right) \text{ (dBm)}.$$

It should be understood that the power calculation formula is used to calculate power of a PSCCH that is not sent on a same PSCCH-PSSCH transmission occasion $i$ as a PSSCH.

$P_{CMAX}$ is maximum sidelink transmit power of the UE. $P_{\mathrm{MAX,CBR}}$ is determined based on an sl-MaxTxPower parameter. The value is related to a priority of PSSCH transmission and a CBR range.

$P'_{\mathrm{PSSCH},D}(i)$ is a calculated power value, namely, a third power value, obtained on the first transmission occasion $i$ based on the downlink path loss. For a manner of calculating the third power value $P'_{\mathrm{PSSCH},D}(i)$, refer to the descriptions in the example in step 222. Details are not described herein again.

$P_{\mathrm{PSSCH},SL}(i)$ is a calculated power value, namely, a second power value, obtained based on sidelink path loss. For a manner of calculating $P_{\mathrm{PSSCH},SL}(i)$, refer to the descriptions in the example in step 222. Details are not described herein again.

In another possible implementation, based on the first indication information, the first adjustment value takes effect only on power control in which sidelink path loss is used. Specifically, for SL link power adjustment and control, a calculation formula for transmit power $P'_{\mathrm{PSSCH}}(i)$, namely, the first transmit power, of a UE, namely, the first terminal device, at a transmission moment i, namely, the first transmission occasion, is as follows:

$$P'_{\mathrm{PSSCH}}(i) = min\left(P_{\mathrm{CMAX}}, P_{\mathrm{MAX,CBR}}, min\left(P_{\mathrm{PSSCH},D}(i), P'_{\mathrm{PSSCH},SL}(i)\right)\right) \text{ (dBm)}.$$

It should be understood that the power calculation formula is used to calculate power of a PSCCH that is not sent on a same PSCCH-PSSCH transmission occasion $i$ as a PSSCH.

$P_{CMAX}$ is maximum sidelink transmit power of the UE. $P_{\mathrm{MAX,CBR}}$ is determined based on an sl-MaxTxPower parameter. The value is related to a priority of PSSCH transmission and a CBR range.

$P_{\mathrm{PSSCH},D}(i)$ is a calculated power value, namely, a first power value, obtained based on downlink path loss. For a manner of calculating the first power value $P_{\mathrm{PSSCH},D}(i)$, refer to the descriptions in the example in step 222. Details are not described herein again.

$P'_{\mathrm{PSSCH},SL}(i)$ is a calculated power value, namely, a fourth power value, obtained on the first transmission occasion $i$ based on the sidelink path loss. For a manner of calculating the fourth power value $P'_{\mathrm{PSSCH},SL}(i)$, refer to the descriptions in the example in step 222. Details are not described herein again.

In another possible implementation, based on the first indication information, the first adjustment value takes effect on power control in which both sidelink path loss and downlink path loss are used. Specifically, for SL link power adjustment and control, a calculation formula for transmit power $P'_{\mathrm{PSSCH}}(i)$, namely, the first transmit power, of a UE, namely, the first terminal device, at a transmission moment $i$, namely, the first transmission occasion, is as follows:

$$P'_{\mathrm{PSSCH}}(i) = min\left(P_{\mathrm{CMAX}}, P_{\mathrm{MAX,CBR}}, min\left(P'_{\mathrm{PSSCH},D}(i), P'_{\mathrm{PSSCH},SL}(i)\right)\right) \text{ (dBm)}.$$

It should be understood that the power calculation formula is used to calculate power of a PSCCH that is not sent on a same PSCCH-PSSCH transmission occasion $i$ as a PSSCH.

$P'_{\mathrm{PSSCH},D}(i)$ is a calculated power value, namely, a third power value, obtained on the first transmission occasion $i$ based on the downlink path loss. For a manner of calculating $P'_{\mathrm{PSSCH},D}(i)$, refer to the descriptions in the example in step 222. Details are not described herein again.

$P'_{\mathrm{PSSCH},SL}(i)$ is a calculated power value, namely, a fourth power value, obtained on the first transmission occasion $i$ based on the sidelink path loss. For a manner of calculating $P'_{\mathrm{PSSCH},SL}(i)$, refer to the descriptions in the example in step 222. Details are not described herein again.

Therefore, the calculation formula for the transmit power $P'_{\mathrm{PSSCH}}(i)$ of the UE at the transmission moment $i$ may also be expressed as follows:

$$P'_{\mathrm{PSSCH}}(i) = min\left(P_{\mathrm{CMAX}}, P_{\mathrm{MAX,CBR}}, min\left(P_{\mathrm{PSSCH},D}(i), P_{\mathrm{PSSCH},SL}(i)\right) + f(i)\right) \text{ (dBm)}.$$

$P_{\mathrm{PSSCH},D}(i)$ is a calculated power value, namely, a first power value, obtained based on the downlink path loss.

For a manner of calculating $P_{\text{PSSCH,D}}(i)$, refer to the descriptions in the example in step 222. Details are not described herein again.

$P_{\text{PSSCH,SL}}(i)$ is a calculated power value, namely, a second power value, obtained based on the sidelink path loss. For a manner of calculating $P_{\text{PSSCH,SL}}(i)$, refer to the descriptions in the example in step 222. Details are not described herein again.

Optionally, a plurality of sets of closed-loop power control loops may alternatively be introduced. To be specific, when the first set and the second set include a plurality of adjustment values, correspondingly, in the foregoing implementations, corresponding adjustment values may be replaced with adjustment values of a plurality of corresponding closed-loop power control loops *l,* that is, corresponding $f(i)$ may be replaced with $f(i, l)$.

For brevity of description, repeated and common parts in the foregoing implementations are not described below again.

In a possible implementation, specifically, based on the first indication information, the first adjustment value takes effect only on power control in which downlink path loss is used. Specifically, for SL link power adjustment and control, a calculation formula for transmit power $P'_{\text{PSSCH}}(i, l)$, namely, the first transmit power, of a UE, namely, the first terminal device, at a transmission moment *i,* namely, the first transmission occasion, is as follows:

$$P'_{\text{PSSCH}}(i, l) = min\left(P_{\text{CMAX}}, P_{\text{MAX,CBR}}, min\left(P'_{\text{PSSCH},D}(i, l), P_{\text{PSSCH},SL}(i)\right)\right) \text{ (dBm)}.$$

$P'_{\text{PSSCH},D}(i, l)$ may be obtained by adjusting the first power value $P_{\text{PSSCH,D}}(i)$ based on the first adjustment value $f(i, l)$:

$P'_{\text{PSSCH},D}(i, l)$ is a third power value obtained on a first transmission occasion *i* based on the downlink path loss by using an adjustment value corresponding to an index *l*. When a dl-P0-PSSCH-PSCCH parameter is provided:

$$P'_{\text{PSSCH},D}(i, l) = P_{\text{O},D} + 10\, log_{10}\left(2^{\mu} * M_{\text{RB}}^{\text{PSSCH}}(i)\right) + \alpha_D * PL_D + f(i, l) \text{ (dBm)};$$

or

otherwise:

$$P'_{\text{PSSCH},D}(i, l) = min\left(P_{\text{CMAX}}, P_{\text{MAX,CBR}}\right) \text{ (dBm)},$$

where

$f(i, l)$ is an adjustment value that corresponds to the index *l* and that is used on the transmission occasion *i*, and is the first adjustment value indicated by the network device by using the first indication information.

In another possible implementation, based on the first indication information, the first adjustment value takes effect only on power control in which downlink path loss is used. Specifically, for SL link power adjustment and control, a calculation formula for transmit power $P'_{\text{PSSCH}}(i, l)$ of a UE, namely, the first terminal device, at a transmission moment *i,* namely, the first transmission occasion, is as follows:

$$P'_{\text{PSSCH}}(i, l) = min\left(P_{\text{CMAX}}, P_{\text{MAX,CBR}}, min\left(P_{\text{PSSCH},D}(i), P'_{\text{PSSCH},SL}(i, l)\right)\right) \text{ (dBm)}.$$

$P'_{\text{PSSCH},D}(i, l)$ may be obtained by adjusting the second power value $P_{\text{PSSCH,SL}}(i)$ based on the first adjustment value $f(i, l)$:

$P'_{\text{PSSCH,SL}}(i, l)$ is a fourth power value obtained on the first transmission occasion *i* based on the sidelink path loss by using an adjustment value corresponding to an index *l*. When an sl-P0-PSSCH-PSCCH parameter is provided, and a cast type in an SCI format indicates a unicast type, or a 2nd-stage SCI format is SCI-2C:

$$P'_{\text{PSSCH,SL}}(i, l) = P_{\text{O},SL} + 10\, log_{10}\left(2^{\mu} * M_{\text{RB}}^{\text{PSSCH}}(i)\right) + \alpha_{SL} * PL_{SL} + f(i, l) \text{ (dBm)};$$

or

otherwise:

$$P'_{\text{PSSCH,SL}}(i,l) = min\big(P_{\text{CMAX}}, P_{\text{PSSCH},D}(i)\big) \text{ (dBm)},$$

where

$f(i, l)$ is an adjustment value that corresponds to the index $l$ and that is used on the transmission occasion $i$, and is the first adjustment value indicated by the network device by using the first indication information.

It should be understood that $f(i, l)$ may alternatively be replaced with the second adjustment value $f_2(i, l)$. To be specific, calculation is performed based on the second adjustment value.

In another possible implementation, based on the first indication information, the first adjustment value takes effect on power control in which both downlink path loss and sidelink path loss are used. Specifically, for SL link power adjustment and control, a calculation formula for transmit power $P'_{\text{PSSCH}}(i, l)$ of a UE, namely, the first terminal device, at a transmission moment $i$, namely, the first transmission occasion, is as follows:

$$P'_{\text{PSSCH}}(i,l) = min\left(P_{\text{CMAX}}, P_{\text{MAX,CBR}}, min\left(P'_{\text{PSSCH},D}(i,l), P'_{\text{PSSCH},SL}(i,l)\right)\right) \text{ (dBm)}.$$

$P'_{\text{PSSCH,D}}(i, l)$ is a third power value obtained on a first transmission occasion $i$ based on the downlink path loss by using an adjustment value corresponding to an index $l$. For a manner of calculating $P'_{\text{PSSCH,D}}(i, l)$, refer to the descriptions in the foregoing implementations. Details are not described herein again.

$P'_{\text{PSSCH,SL}}(i, l)$ is a fourth power value obtained on the first transmission occasion $i$ based on the sidelink path loss by using the adjustment value corresponding to the index $l$. For a manner of calculating $P'_{\text{PSSCH,SL}}(i, l)$, refer to the descriptions in the foregoing implementations. Details are not described herein again.

S223: The first terminal device sends sidelink information to the second terminal device on the first transmission occasion based on the first transmit power.

It should be understood that the first terminal device performs sidelink communication with the second terminal device, and the first transmit power may be PSSCH power. The first transmit power may be power at which the first terminal device sends the sidelink information to the second terminal device on the first transmission occasion, or the first transmit power may be used for determining power at which the first terminal device sends the sidelink information to the second terminal device on the first transmission occasion.

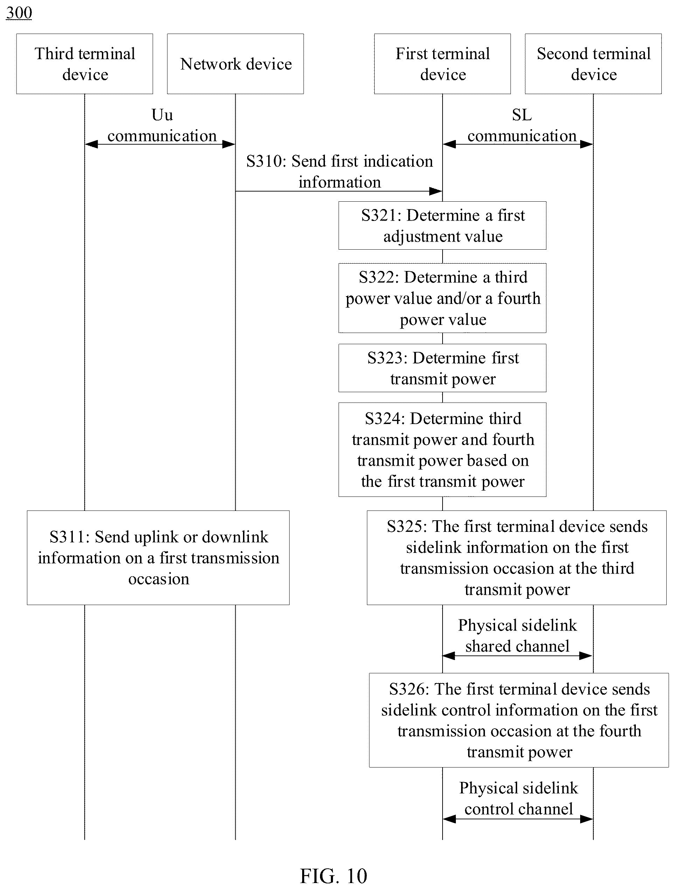

FIG. 10 shows another sidelink power control method 300 according to this application. As shown in FIG. 10:

S310: A network device sends first indication information, and correspondingly, a first terminal device receives the first indication information.

S321: The first terminal device determines, based on the first indication information, a first adjustment value corresponding to a first transmission occasion.

It should be understood that the first transmission occasion corresponds to at least one symbol.

That the first adjustment value corresponds to the first transmission occasion means that, for different transmission occasions $i$, the terminal device may determine different power adjustment values, namely, the first adjustment value.

Optionally, the first terminal device determines, based on the first indication information, a first adjustment value and a second adjustment value that correspond to a first transmission occasion, where the first adjustment value may be the same as or different from the second adjustment value.

For example, the network device may use DCI signaling, and the DCI signaling may include the first adjustment value, or may include both the first adjustment value and the second adjustment value.

Optionally, in S311, a third terminal device sends uplink information to the network device on the first transmission occasion, or the network device sends downlink information to a third terminal device on the first transmission occasion. A frequency domain corresponding to the uplink information or the downlink information overlaps a frequency domain corresponding to sidelink information sent by the terminal device. In other words, in this case, a time-frequency resource used for sidelink transmission completely or partially overlaps a time-frequency resource used for Uu uplink transmission, or a time-frequency resource used for sidelink transmission completely or partially overlaps a time-frequency resource used for Uu downlink transmission.

It should be understood that, when a same time-frequency resource is used for an SL and a UL or a DL, to ensure that the SL does not cause strong interference to the UL or the DL, SL transmit power should not be excessively high, and adjustment and control need to be performed.

Optionally, the first indication information may be carried in RRC signaling or DCI signaling.

For example, the first indication information may be a TPC command in the DCI signaling.

S322: The first terminal device determines a third power value and/or a fourth power value based on the first adjustment value.

Optionally, the third power value is determined by the first terminal device based on the first adjustment value and a first power value, and the fourth power value is determined by the first terminal device based on the first adjustment value and a second power value.

Optionally, the third power value is determined by the first terminal device based on the first adjustment value and a first power value, and the fourth power value is determined by the first terminal device based on the second adjustment value and a second power value.

Optionally, the first adjustment value may be any adjustment value in a first set, the first set includes at least one adjustment value in a predefined adjustment value set, the second adjustment value is any adjustment value in a second set, and the second set includes at least one adjustment value in a predefined adjustment value set.

Optionally, the first adjustment value is equal to a sum of at least one adjustment value in a first set and a third adjustment value, the first set includes at least one adjustment value in a predefined adjustment value set, the second adjustment value is equal to a sum of at least one adjustment value in a second set and a fourth adjustment value, the second set includes at least one adjustment value in a predefined adjustment value set, the third adjustment value and the fourth adjustment value correspond to a second transmission occasion, the second transmission occasion corresponds to at least one symbol, the third adjustment value is used for determining second transmit power or both the third adjustment value and the fourth adjustment value are used for determining second transmit power, the first terminal device sends sidelink information to a second terminal device on the second transmission occasion at the second transmit power, and the second transmission occasion is earlier than the first transmission occasion.

In other words, a power adjustment value may take effect in two manners. In one manner, the adjustment value directly takes effect on power control, to be specific, an absolute adjustment value of the adjustment value is delivered in indication information, that is, $f(i)=\delta_{abs}(i)$. In the other manner, the adjustment value takes effect on power control together with a historical adjustment value $f(i\text{-}i_0)$, namely, the third adjustment value or the fourth adjustment value, where $f(i\text{-}i_0)$ is an adjustment value determined on a corresponding transmission occasion $i\text{-}i_0$, to be specific, a relative adjustment value of the adjustment value is delivered in indication information, that is, $f(i)=f(i-i_0)+\sum_{m=0}^{C(D_i)-1}\delta_{acc}(m)$, where $C(D_i)$ represents a quantity of times that TPC control signaling is received within a period of time before a transmission occasion $i$, $\delta_{acc}(m)$ is an adjustment value determined within the period of time before the transmission occasion $i$, and therefore $\sum_{m=0}^{C(D_i)-1}\delta_{acc}(m)$ is a sum of one or more TPC control signaling values received by the terminal device within the period of time before the transmission occasion i.

The first power value is determined by the first terminal device based on a first indicated power value, downlink transmission loss, and a quantity of resource blocks RBs, where the first indicated power value and the downlink transmission loss are determined by the first terminal device, and the RB is used for sending sidelink information on the first transmission occasion. In other words, the first power value is a calculated power value obtained based on downlink path loss, and the first adjustment value may be used for adjusting the first power value to determine a new power value, namely, the third power value. The second power value is determined by the first terminal device based on a second indicated power value, sidelink transmission loss, and the quantity of RBs, where the second indicated power value and the sidelink transmission loss are determined by the first terminal device, and the RB is used for sending sidelink information on the first transmission occasion. In other words, the second power value is a calculated power value obtained based on sidelink path loss, and the first adjustment value may be used as a power adjustment value for adjusting the first power value to determine a new power value, namely, the fourth power value.

It should be understood that the first indicated power value and the downlink transmission path loss may be indicated by the network device to the terminal device by sending indication information, and the terminal device determines the first indicated power value and the downlink transmission path loss based on the indication information.

S323: The first terminal device determines first transmit power based on the third power value and/or the fourth power value.

It should be understood that, for PSSCH power control, power control and adjustment for an SL UE may be configured to be based only on downlink path loss, or based only on sidelink path loss, or based on both downlink path loss and sidelink path loss. To be specific, the first terminal device may determine the first transmit power based on the third power value and the second power value, or the first terminal device may determine the first transmit power based on the first power value and the fourth power value, or the first terminal device may determine the first transmit power based on the third power value and the fourth power value.

S324: The first terminal device determines third transmit power and fourth transmit power based on the first transmit power.

It should be understood that the third transmit power and the fourth transmit power correspond to different RBs, and are used for transmission on a same transmission occasion *i,* namely, the first transmission occasion *i.*

S325: The first terminal device sends sidelink information to the second terminal device on the first transmission occasion at the third transmit power.

S326: The first terminal device sends sidelink control information to the second terminal device on the first transmission occasion at the fourth transmit power.

It should be understood that the fourth transmit power is PSSCH transmit power, the fifth transmit power is PSCCH transmit power, and a PSSCH and a PSCCH are transmitted in different RBs of a same transmission occasion *i,* namely, a same symbol. In this case, the first transmit power should be allocated based on a quantity of RBs allocated to the PSSCH and a quantity of RBs allocated to the PSCCH on the transmission occasion *i.*

In a possible implementation, on the transmission occasion *i,* when the UE, namely, the first terminal device, sends the PSCCH and the PSSCH on a same transmission occasion, namely, the first transmission occasion, PSSCH transmit power $P'_{\mathrm{PSSCH2}}(i)$, namely, the third transmit power, may be expressed by using the following formula:

$$P'_{\mathrm{PSSCH2}}(i) = 10log_{10}\left(\frac{M_{\mathrm{RB}}^{\mathrm{PSSCH}}(i)-M_{\mathrm{RB}}^{\mathrm{PSCCH}}(i)}{M_{\mathrm{RB}}^{\mathrm{PSSCH}}(i)}\right) + P'_{\mathrm{PSSCH}}(i) \text{ (dBm)};$$

and

the UE determines, at a PSCCH-PSSCH transmission moment *i,* transmit power of PSCCH transmission, namely, the fourth transmit power, according to the following formula:

$$P'_{\mathrm{PSCCH}}(i) = 10log_{10}\left(\frac{M_{\mathrm{RB}}^{\mathrm{PSCCH}}(i)}{M_{\mathrm{RB}}^{\mathrm{PSSCH}}(i)}\right) + P'_{\mathrm{PSSCH}}(i) \text{ (dBm)},$$

where

$M_{\mathrm{RB}}^{\mathrm{PSCCH}}(i)$ represents a quantity of RBs allocated to the PSCCH transmission on the transmission occasion *i,* and

$M_{\mathrm{RB}}^{\mathrm{PSSCH}}(i)$ represents a quantity of RBs allocated to PSSCH transmission on the transmission occasion *i.*

It should be understood that, because three expressions of the first transmit power $P'_{PSSCH}(i)$ are mentioned in step 223 of the method 200, $P'_{PSSCH2}(i)$ may also be correspondingly extended into three possible corresponding expressions based on the three expressions of $P'_{PSSCH}(i)$. Details are not described herein again.

In another possible implementation, the first indication information includes a plurality of first adjustment value sets. In this case, on the transmission occasion *i,* when the PSCCH and the PSSCH are simultaneously sent on a same transmission occasion, third transmit power $P'_{\mathrm{PSSCH2}}(i, l)$ of the PSSCH may be expressed by using the following formula:

$$P'_{\mathrm{PSSCH2}}(i, l) = 10log_{10}\left(\frac{M_{\mathrm{RB}}^{\mathrm{PSSCH}}(i)-M_{\mathrm{RB}}^{\mathrm{PSCCH}}(i)}{M_{\mathrm{RB}}^{\mathrm{PSSCH}}(i)}\right) + P'_{\mathrm{PSSCH}}(i, l) \text{ (dBm)};$$

and

the UE determines, at a PSCCH-PSSCH transmission moment *i,* fourth transmit power of PSCCH transmission according to the following formula:

$$P'_{\mathrm{PSCCH}}(i, l) = 10log_{10}\left(\frac{M_{\mathrm{RB}}^{\mathrm{PSCCH}}(i)}{M_{\mathrm{RB}}^{\mathrm{PSSCH}}(i)}\right) + P'_{\mathrm{PSSCH}}(i, l) \text{ (dBm)},$$

where

$M_{\mathrm{RB}}^{\mathrm{PSCCH}}(i)$ represents a quantity of RBs allocated to the PSCCH transmission on the transmission occasion *i,* and

$M_{\mathrm{RB}}^{\mathrm{PSSCH}}(i)$ represents a quantity of RBs allocated to PSSCH transmission on the transmission occasion *i.*

It should be understood that, because three implementations of the first transmit power $P'_{PSSCH}(i, l)$ are mentioned in step 223 of the method 200, $P'_{PSCCH}(i, l)$ may also be correspondingly extended into three possible corresponding expressions based on the three expressions of $P'_{PSSCH}(i, l)$. Details are not described herein again.

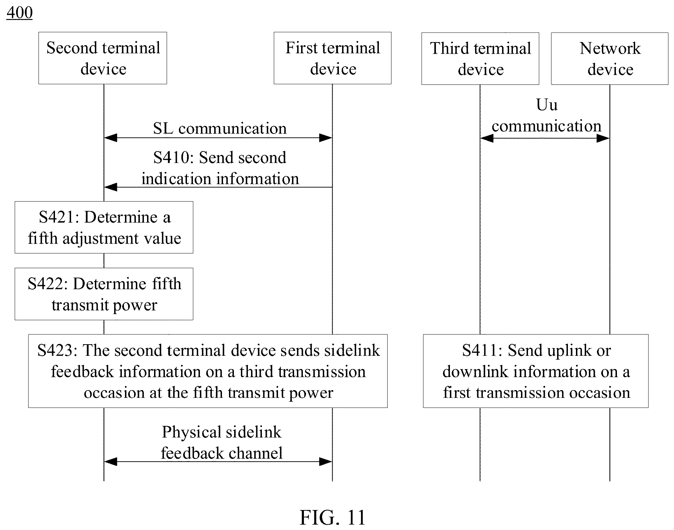

FIG. 11 shows another side link power control method 400 according to this application. As shown in FIG. 11:

S410: A first terminal device sends second indication information, and correspondingly, a second terminal device receives the second indication information.

S421: The second terminal device determines, based on the second indication information, a fifth adjustment value corresponding to a third transmission occasion.

The third transmission occasion corresponds to at least one symbol.

Optionally, in S411, a third terminal device sends uplink information to a network device on the third transmission occasion, or a network device sends downlink information to a third terminal device on the third transmission occasion. A frequency domain corresponding to the uplink information or the downlink information overlaps a frequency domain corresponding to sidelink feedback information sent by the terminal device. In other words, in this case, a time-frequency resource used for sidelink transmission completely or partially overlaps a time-frequency resource used for Uu uplink transmission, or a time-frequency resource used for sidelink transmission completely or partially overlaps a time-frequency resource used for Uu downlink transmission.

It should be understood that, when a same time-frequency resource is used for an SL and a UL or a DL, to ensure that the SL does not cause strong interference to the UL or the DL, SL transmit power should not be excessively high, and adjustment and control need to be performed.

S422: The second terminal device determines fifth transmit power based on the fifth adjustment value.

Optionally, the fifth adjustment value is any adjustment value in a third set, and the third set includes at least one adjustment value in a predefined adjustment value set.

Optionally, the fifth adjustment value is equal to a sum of at least one adjustment value in a third set and a sixth adjustment value, the third set includes at least one adjustment value in a predefined adjustment value set, the sixth adjustment value corresponds to a fourth transmission occasion, the fourth transmission occasion corresponds to at least one symbol, the sixth adjustment value is used for determining sixth transmit power, the second terminal device sends sidelink feedback information to the first terminal device on the fourth transmission occasion at the sixth transmit power, and the fourth transmission occasion is earlier than the third transmission occasion.

In other words, a power adjustment value may take effect in two manners. In one manner, the adjustment value directly takes effect on power control, to be specific, an absolute adjustment value of the adjustment value is delivered in indication information, that is, $g(i)=\delta_{abs1}(i)$. In the other manner, the adjustment value takes effect on power control together with a historical adjustment value $g(i-i_0)$, where $g(i-i_0)$ is an adjustment value, namely, the sixth adjustment value, determined on a corresponding transmission occasion $i-i_0$, to be specific, a relative adjustment value of the adjustment value is delivered in indication information, that is, $g(i)=g(i-i_0)+\sum_{m=0}^{C(D_i)-1}\delta_{acc}(m)$, where $C(D_i)$ represents a quantity of times that TPC control signaling is received within a period of time before a transmission occasion $i$, $\delta_{acc}(m)$ is an adjustment value determined within the period of time before the transmission occasion $i$, and therefore $\sum_{m=0}^{C(D_i)-1}\delta_{acc}(m)$ is a sum of TPC control signaling values received by the terminal device within the period of time before the transmission occasion $i$. In addition, the network device and the terminal device may alternatively maintain a plurality of sets of power adjustment values, and use historical power adjustment values that have been used as a new set of power adjustment values.

In a possible implementation, as shown in Table 2, the network device may deliver the third set by using indication information (for example, TPC). The third set includes at least one power adjustment value in Table 2, and a value of an adjustment value is determined based on an absolute adjustment value or a historical adjustment value.

It should be understood that, in a high-frequency scenario in which communication is performed by using a beam, when a communication link between two parties of a communication pair changes or a communication beam pair needs to be adjusted or an original communication link fails, switching needs to be quickly performed to another set of power control parameters to avoid communication deterioration caused by link deterioration or beam switching. The indication information includes a plurality of adjustment value sets, namely, a plurality of sets of closed-loop indexed power control parameters. When link switching needs to be performed between the communication pair, efficient switching may be performed based on historically maintained power control index values, to avoid sharp deterioration of communication.

S423: The second terminal device sends sidelink feedback information to the first terminal device on the third transmission occasion at the fifth transmit power.

It should be understood that the first terminal device has sent a PSSCH to the second terminal, and as a feedback, the second terminal device needs to send HARQ-ACK information and collision indication information to the first terminal device. Therefore, the fifth transmit power may be PSFCH transmit power.

It should be understood that, for the PSFCH transmit power, when sending a PSFCH signal, a receiving UE of a sidelink transmission PSCCH/PSSCH may perform power control through a TX of the sidelink transmission PSCCH/PSSCH, to avoid interference to a UL or a DL.

In a possible implementation, a quantity of times of PSFCH transmission scheduled for a UE, namely, the second terminal device, is $N_{sch,TX,PSFCH}$, including PSFCH transmission used for HARQ-ACK information and PSFCH transmission used for collision indication information. If the UE supports a maximum of $N_{max,PSFCH}$ times of PSFCH transmission at the same time, the UE determines, according to the following formula, that $N_{Tx,PSFCH}$ times of PSFCH transmission are to be simultaneously performed, where power of each PSFCH transmission is $P_{PSFCH}k(i)$, and $1 \le k \le N_{Tx,PSFCH}$.

Case 1:

1. If dl-P0-PSFCH is provided, dl-P0-PSFCH indicates a PSFCH power value that is based on downlink path loss:

$$P'_{\text{PSFCH,one}} = P_{O,PSFCH} + 10\,log_{10}(2^{\mu}) + \alpha_{PSFCH} * PL_D + g(i)\ (\text{dBm}).$$

$g(i)$ is a fifth adjustment value, on a third transmission occasion $i$, that is determined based on the second indication information sent by the first terminal device. A value of $P_{O,PSFCH}$ is indicated by dl-P0-PSFCH. If dl-Alpha-PSFCH is provided and dl-Alpha-PSFCH indicates a power compensation value that is based on the downlink path loss, $\alpha_{PSFCH}$ is a value provided by dl-Alpha-PSFCH; or otherwise, $\alpha_{PSFCH} = 1$. $PL_D$ represents transmission loss measured based on a reference signal.

1.1 When $N_{sch,TX,PSFCH} \le N_{max,PSFCH}$:

1.1.1 If $P'_{PSFCH,one}$ + 10 $log_{10}(N_{sch,TX,PSFCH}) \le P_{CMAX}$, where $P_{CMAX}$ is maximum transmit power of the UE, $N_{Tx,PSFCH} = N_{sch,TX,PSFCH}$, and $P_{PSFCH,k}(i)=P'_{PSFCH,one}$.

1.1.2 If $P_{PSFCH,one}$ + 10 $log_{10}(N_{sch,TX,PSFCH}) > P_{CMAX}$ and if there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH. In this case, $N_{\text{Tx,PSFCH}} > \max(1, \sum_{i=1}^{K} M_i)$. In the case of $1 \le i \le 8$, $M_i$ represents a quantity of times of PSFCH transmission corresponding to HARQ-ACK information with a priority value of $i$. In the case of $i > 8$, $M_i$ represents a quantity of times of PSFCH transmission corresponding to a collision indication with a priority value of $i$-8. $K$ is a maximum value that satisfies a relational expression of $P'_{\text{PSFCH,one}} + 10\,log_{10}(\max(1, \sum_{i=1}^{K} M_i)) \le P_{CMAX}$ ; or otherwise, $K=0$:

$$P_{\text{PSFCH,k}}(i)=\min(P_{CMAX} - 10\,log_{10}(N_{\text{TX,PSFCH}}), P'_{\text{PSFCH,one}})\ (\text{dBm}).$$

1.2 When $N_{sch,TX,PSFCH} \ge N_{max,PSFCH}$:

The UE performs sorting in ascending order based on priority values corresponding to PSFCH transmission, and then selects $N_{max,PSFCH}$ times of PSFCH transmission.

1.2.1 If $P'_{PSFCH,one}$ + 10 $log_{10}(N_{sch,TX,PSFCH}) \le P_{CMAX}$, where $P_{CMAX}$ is maximum transmit power of the UE, $N_{Tx,PSFCH} = N_{max,PSFCH}$, and $P_{PSFCH,k}(i)=P'_{PSFCH,one}$.

1.2.2 If $P_{PSFCH,one}$ + 10 $log_{10}(N_{sch,TX,PSFCH}) > P_{CMAX}$ and if there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH. In this case, $N_{\text{Tx,PSFCH}} > \max(1, \sum_{i=1}^{K} M_i)$. In the case of $1 \le i \le 8$, $M_i$ represents a quantity of times of PSFCH transmission corresponding to HARQ-ACK information with a priority value of $i$. In the case of $i > 8$, $M_i$ represents a quantity of times of PSFCH transmission corresponding to a collision indication with a priority value of $i$-8. $K$ is a maximum value that satisfies a relational expression of

$$P'_{\text{PSFCH,one}} + 10\,log_{10}\left(\max\left(1, \textstyle\sum_{i=1}^{K} M_i\right)\right) \leq P_{CMAX} \text{ ; or otherwise, } K=0:$$

$$P_{\text{PSFCH,k}}(i)=\min\left(P_{CMAX} - 10\,log_{10}\left(N_{\text{sch,TX,PSFCH}}\right), P'_{\text{PSFCH,one}}\right) \text{ (dBm)}.$$

Case 2:

2. If dl-P0-PSFCH is not provided:

$$P_{\text{PSFCH,k}}(i)=P_{CMAX}-10\,log_{10}(N_{\text{TX,PSFCH}}) \text{ (dBm)}.$$

The UE autonomously determines $N_{\text{Tx,PSFCH}}$ times of PSFCH transmission, and a rule of performing determining is as follows. If there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH, to ensure that $N_{\text{Tx,PSFCH}} \geq 1$.

In another possible implementation:

Case 1:

1. If dl-P0-PSFCH is provided:

$$P'_{\text{PSFCH,one}} = P_{0,PSFCH} + 10\,log_{10}(2^{\mu}) + \alpha_{PSFCH} * PL_D + g(i, l) \text{ (dBm)}.$$

$g(i, l)$ is a fifth adjustment value, on a third transmission occasion $i$, that is in an adjustment value set corresponding to an index $l$ and that is determined based on the second indication information sent by the first terminal device. A value of $P_{0,PSFCH}$ is indicated by dl-P0-PSFCH. If dl-Alpha-PSFCH is provided, $\alpha_{PSFCH}$ is a value provided by dl-Alpha-PSFCH; or otherwise, $\alpha_{PSFCH} = 1$. $PL_D$ represents transmission loss measured based on a reference signal, and for example, is obtained through measurement based on a CSI-RS reference signal.

1.1 When $N_{\text{sch,TX,PSFCH}} \leq N_{\text{max,PSFCH}}$:

1.1.1 If $P'_{\text{PSFCH,one}} + 10\,log_{10}(N_{\text{sch,TX,PSFCH}}) \leq P_{CMAX}$, where $P_{CMAX}$ is maximum transmit power of the UE, $N_{\text{Tx,PSFCH}} = N_{\text{sch,TX,PSFCH}}$, and $P_{\text{PSFCH,k}}(i, l)=P'_{\text{PSFCH,one}}$.

1.1.2 If $P_{\text{PSFCH,one}} + 10\,log_{10}(N_{\text{sch,TX,PSFCH}}) > P_{CMAX}$ and if there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH. In this case, $N_{\text{Tx,PSFCH}} > \max\left(1, \sum_{i=1}^{K} M_i\right)$. In the case of $1 \leq i \leq 8$, $M_i$ represents a quantity of times of PSFCH transmission corresponding to HARQ-ACK information with a priority value of $i$. In the case of $i > 8$, $M_i$ represents a quantity of times of PSFCH transmission corresponding to a collision indication with a priority value of $i$-8. $K$ is a maximum value that satisfies a relational expression of

$$P'_{\text{PSFCH,one}} + 10\,log_{10}\left(\max\left(1, \textstyle\sum_{i=1}^{K} M_i\right)\right) \leq P_{CMAX} \text{ ; or otherwise, } K=0:$$

$$P_{\text{PSFCH,k}}(i, l)=\min\left(P_{CMAX} - 10\,log_{10}\left(N_{\text{TX,PSFCH}}\right), P'_{\text{PSFCH,one}}\right) \text{ (dBm)}.$$

1.2 When $N_{\text{sch,TX,PSFCH}} \geq N_{\text{max,PSFCH}}$:

The UE performs sorting in ascending order based on priority values corresponding to PSFCH transmission, and then selects $N_{\text{max,PSFCH}}$ times of PSFCH transmission.

1.2.1 If $P_{\text{PSFCH,one}}+10\,log_{10}(N_{\text{max,PSFCH}}) \leq P_{CMAX}$, where $P_{CMAX}$ is maximum transmit power of the UE, $N_{\text{Tx,PSFCH}} = N_{\text{max,PSFCH}}$, and $P_{\text{PSFCH,k}}(i, l)=P_{\text{PSFCH,one}}$.

1.2.2 If $P_{\text{PSFCH,one}} + 10\,log_{10}(N_{\text{sch,TX,PSFCH}}) > P_{CMAX}$ and if there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH. In this case, $N_{\text{Tx,PSFCH}} > \max(1, \sum_{i=1}^{K} M_i)$ . In the case of $1 \leq i \leq 8$, $M_i$ represents a quantity of times of PSFCH transmission corresponding to HARQ-ACK information with a priority value of $i$. In the case of $i > 8$, $M_i$ represents a quantity of times of PSFCH transmission corresponding to a collision indication with a priority value of $i$-8. $K$ is a maximum value that satisfies a relational expression of

$$P_{\text{PSFCH,one}} + 10\, log_{10}\left(\max(1, \sum_{i=1}^{K} M_i)\right) \leq P_{CMAX}\,;\text{ or otherwise, } K\text{=0}:$$

$$P_{\text{PSFCH,k}}(i, l) = \min(P_{CMAX} - 10\, log_{10}(N_{\text{sch,TX,PSFCH}}), P_{\text{PSFCH,one}})\ (\text{dBm}).$$

Case 2:

2. If dl-P0-PSFCH is not provided:

$$P_{\text{PSFCH,k}}(i, l) = P_{CMAX} - 10\, log_{10}(N_{\text{TX,PSFCH}}(i, l))\ (\text{dBm}).$$

The UE autonomously determines $N_{\text{Tx,PSFCH}}$ times of PSFCH transmission, and a rule of performing determining is as follows. If there is HARQ information to be sent, the UE first performs sorting in ascending order based on PSSCH priority values corresponding to the HARQ-ACK information in a PSFCH. Then, if there is collision indication information to be sent, the UE performs sorting in ascending order based on PSSCH priority values corresponding to the collision information in the PSFCH, to ensure that $N_{\text{Tx,PSFCH}} \geq 1$.

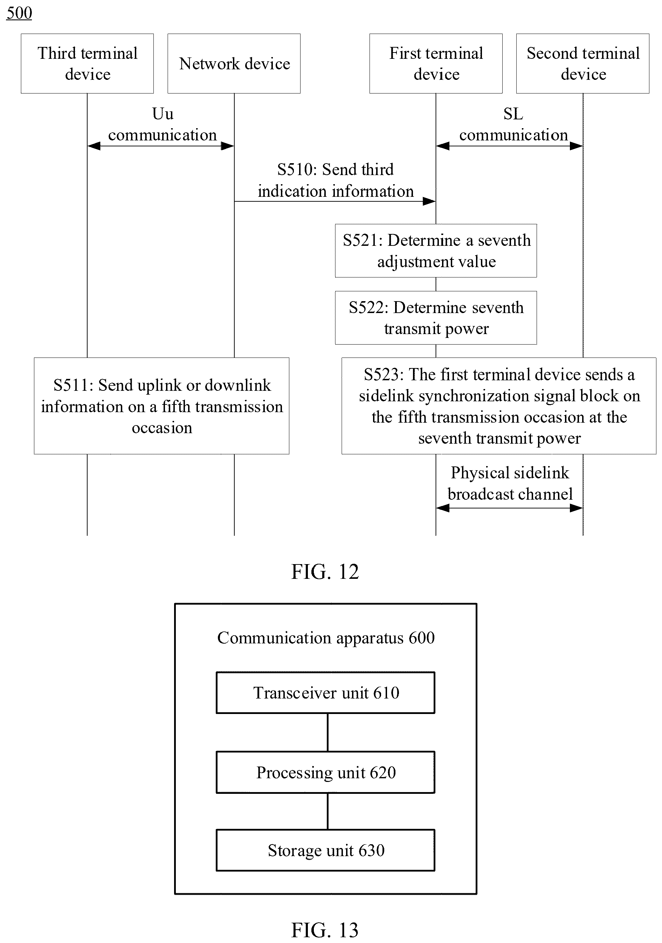

FIG. 12 shows another sidelink power control method 500 according to this application. As shown in FIG. 12:

S510: A network device sends third indication information, and correspondingly, a first terminal device receives the third indication information.

S521: The first terminal device determines, based on the third indication information, a seventh adjustment value corresponding to a fifth transmission occasion.

It should be understood that a first transmission occasion corresponds to at least one symbol.

That the seventh adjustment value corresponds to the fifth transmission occasion means that, for different transmission occasions i, the terminal device may determine different power adjustment values, namely, the seventh adjustment value.

Optionally, in S511, a third terminal device sends uplink information to the network device on the fifth transmission occasion, or the network device sends downlink information to a third terminal device on the fifth transmission occasion. A frequency domain corresponding to the uplink information or the downlink information overlaps a frequency domain corresponding to sidelink information sent by the terminal device. In other words, in this case, a time-frequency resource used for sidelink transmission completely or partially overlaps a time-frequency resource used for Uu uplink transmission, or a time-frequency resource used for sidelink transmission completely or partially overlaps a time-frequency resource used for Uu downlink transmission.

It should be understood that, when a same time-frequency resource is used for an SL and a UL or a DL, to ensure that the SL does not cause strong interference to the UL or the DL, SL transmit power should not be excessively high, and adjustment and control need to be performed.

Optionally, the third indication information may be carried in RRC signaling or DCI signaling.

For example, the third indication information may be a TPC command in the DCI signaling.

S522: The first terminal device determines seventh transmit power based on the seventh adjustment value.

Optionally, the seventh adjustment value is any adjustment value in a fourth set, and the fourth set includes at least one adjustment value in a predefined adjustment value set.

Optionally, the seventh adjustment value is equal to a sum of at least one adjustment value in a fourth set and an eighth adjustment value, the fourth set includes at least one adjustment value in a predefined adjustment value set, the eighth adjustment value corresponds to a sixth transmission occasion, the sixth transmission occasion corresponds to at least one symbol, the eighth adjustment value is used for determining eighth transmit power, a second terminal device sends sidelink feedback information to the first terminal device on the sixth transmission occasion at the eighth transmit power, and the sixth transmission occasion is earlier than the fifth transmission occasion.

In other words, a power adjustment value may take effect in two manners. In one manner, the adjustment value directly takes effect on power control, to be specific, an absolute adjustment value of the adjustment value is delivered in indication information, that is, $g(i)=\delta_{abs1}(i)$. In the other manner, the adjustment value takes effect on power control together with a historical adjustment value $g(i-i_0)$, where $g(i-i_0)$ is an adjustment value, namely, the sixth adjustment value, determined on a corresponding transmission occasion $i-i_0$, to be specific, a relative adjustment value of the adjustment value is delivered in indication information, that is, $g(i)=g(i-i_0)+\sum_{m=0}^{C(D_i)-1}\delta_{acc}(m)$, where $C(D_i)$ represents a quantity of times that TPC control signaling is received within a period of time before a transmission occasion i, $\delta_{acc}(m)$ is an adjustment value determined within the period of time before the transmission occasion i, and therefore $\sum_{m=0}^{C(D_i)-1}\delta_{acc}(m)$ is a sum of TPC control signaling values received by the terminal device within the period of time before the transmission occasion $i$. In addition, the network device and the terminal device may alternatively maintain a plurality of sets of power adjustment values, and use historical power adjustment values that have been used as a new set of power adjustment values.

In a possible implementation, as shown in Table 2, the network device may deliver the fourth set by using indication information (for example, TPC). The fourth set includes at least one power adjustment value in Table 2, and a value of an adjustment value is determined based on an absolute adjustment value or a historical adjustment value.

It should be understood that, in a high-frequency scenario in which communication is performed by using a beam, when a communication link between two parties of a communication pair changes or a communication beam pair needs to be adjusted or an original communication link fails, switching needs to be quickly performed to another set of power control parameters to avoid communication deterioration caused by link deterioration or beam switching. The indication information includes a plurality of adjustment value sets, namely, a plurality of sets of closed-loop indexed power control parameters. When link switching needs to be performed between the communication pair, efficient switching may be performed based on historically maintained power control index values, to avoid sharp deterioration of communication.

S523: The first terminal device sends a sidelink synchronization signal block to the second terminal device on the fifth transmission occasion at the seventh transmit power.

It should be understood that the seventh transmit power may be transmit power of S-SS/PSBCH block transmission.

In a possible implementation, a UE, namely, the first terminal device, sends an S-SS/PSBCH block on a transmission occasion i, namely, the fifth transmission occasion, and determines transmit power of S-SS/PSBCH transmission according to the following formula:

$$P_{\text{S-SSB}}(i) = min\left(P_{\text{CMAX}}, P_{O,S-SSB} + 10\,log_{10}\left(2^{\mu} * M_{\text{RB}}^{\text{S}-\text{SSB}}(i)\right) + \alpha_{S-SSB} * PL_D + f(i)\right)(\text{dBm}).$$

In the formula, $f(i)$ is a power adjustment value, namely, the seventh adjustment value, determined by the first terminal device based on the third indication information on the transmission occasion $i$.

In the formula, $P_{CMAX}$ is maximum sidelink transmit power of the UE.

If a dl-P0-PSBCH parameter is provided, a value of $P_{O,S-SSB}$ is a value provided by dl-P0-PSBCH; or otherwise, $P_{O,S-SSB}(i) = P_{CMAX}$. If dl-Alpha-PSBCH is provided, $\alpha_{S-SSB}$ is a value provided by dl-Alpha-PSBCH; or otherwise, $\alpha_{S-SSB} = 1$.

In the formula, $PL_D$ represents transmission loss estimated by the UE based on a reference signal, and $M_{\text{RB}}^{\text{S-SSB}}$ represents a quantity of RBs allocated to S-SSB transmission on the transmission occasion i. In NR R16/R17 SL, $M_{\text{RB}}^{\text{S-SSB}} = 11$.

According to this embodiment of this application, when a UL and an SL coexist or a DL and an SL coexist, a base station delivers indication information, for example, a TPC instruction, to adjust transmit power of an SL UE, to prevent SL transmission from causing strong interference to the UL or the DL.

In another possible implementation, a UE determines, at an S-SS/PSBCH block transmission moment $i$, transmit power of S-SS/PSBCH transmission by using an adjustment value corresponding to an index $I$ and according to the following formula:

$$P_{\text{S-SSB}}(i) = min\left(P_{\text{CMAX}}, P_{0,S-SSB} + 10\,log_{10}\left(2^{\mu} * M_{\text{RB}}^{\text{S-SSB}}(i)\right) + \alpha_{S-SSB} * PL_D +\right.$$

$$\left. f(i, l)\right) \text{ (dBm)},$$

where

$f(i, l)$ is a seventh adjustment value determined by the first terminal device on a transmission occasion $i$ by using an adjustment value corresponding to an index $l$ and based on the third indication information, for example, RRC signaling.

In the formula, $P_{CMAX}$ is maximum sidelink transmit power of the UE.

If a dl-P0-PSBCH parameter is provided, a value of $P_{0,S-SSB}$ is a value provided by dl-P0-PSBCH; or otherwise, $P_{0,S-SSB}(i) = P_{CMAX}$. If dl-Alpha-PSBCH is provided, $\alpha_{S-SSB}$ is a value provided by dl-Alpha-PSBCH; or otherwise, $\alpha_{S-SSB} = 1$.

In the formula, $PL_D$ represents downlink transmission loss estimated by the UE based on a reference signal, and $M_{\text{RB}}^{\text{S-SSB}}$ represents a quantity of RBs allocated to S-SSB transmission on the transmission occasion $i$. In NR R16/R17 SL, $M_{\text{RB}}^{\text{S-SSB}} = 11$.

According to this embodiment of this application, when a UL and an SL coexist or a DL and an SL coexist, the network device sends indication information to adjust transmit power of an SL UE, to prevent SL transmission from causing interference to the UL or the DL. In addition, a plurality of sets of closed-loop indexed power control parameters are introduced. When link switching needs to be performed between the communication pair, efficient switching may be performed based on historically maintained power control index values, to avoid sharp deterioration of communication.

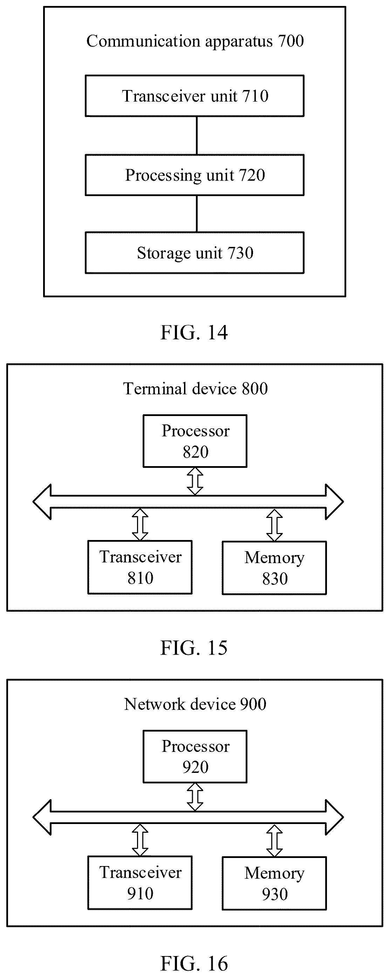

With reference to the sidelink power control method provided in the foregoing embodiments of this application, a terminal device and a network device provided in embodiments of this application are described with reference to FIG. 13 and FIG. 14.

FIG. 13 is a block diagram of a wireless communication apparatus according to an embodiment of this application. As shown in FIG. 13, the apparatus 600 may be a first terminal device, or may be a chip or a circuit, for example, a chip or a circuit that may be disposed in a first device.

The apparatus 600 may include a transceiver unit 610 and a processing unit 620, and optionally, may further include a storage unit 630. The storage unit 630 is configured to store instructions.

The transceiver unit 610 is configured to receive indication information, where the indication information indicates an adjustment value.

The processing unit 620 is configured to determine transmit power based on the adjustment value.

The transceiver unit 610 is further configured to send a signal based on the transmit power.

It should be understood that the units in the apparatus 600 are respectively configured to perform the actions or the processing processes performed by the terminal device in the foregoing methods. Herein, to avoid repetition, detailed descriptions are omitted.

FIG. 14 is a block diagram of a wireless communication apparatus according to an embodiment of this application. As shown in FIG. 14, the apparatus 700 may be a network device, or may be a chip or a circuit, for example, a chip or a circuit that may be disposed in a network device.

The apparatus 700 includes a transceiver unit 710 and a processing unit 720, and optionally, may further include a storage unit 730. The storage unit 730 is configured to store instructions.

The transceiver unit 710 is configured to send indication information, where the indication information indicates an adjustment value.

The processing unit 720 is configured to determine indication information.

It should be understood that the units in the terminal 700 are respectively configured to perform the actions or the processing processes performed by the network device in the foregoing methods. Herein, to avoid repetition, detailed descriptions are omitted.

FIG. 15 is a block diagram of a terminal device according to an embodiment of this application. As shown in FIG. 15, the terminal device 800 includes a transceiver 810, a processor 820, and a memory 830. The transceiver 810, the processor 820, and the memory 830 communicate with each other through an internal connection path, to transmit a control signal and/or a data signal.

The transceiver 810 is configured to receive indication information, where the indication information indicates an adjustment value.

The processor 820 is configured to determine transmit power based on the adjustment value.

The transceiver 810 is further configured to send a signal based on the transmit power.

It should be understood that, when the processor 820 invokes a computer program from the memory and runs the computer program, the processor 820 may be configured to perform the foregoing methods and implement a function of an execution entity of the methods, for example, a terminal device.

FIG. 16 is a block diagram of a network device according to an embodiment of this application. As shown in FIG. 16, the network device 900 includes a transceiver 910, a processor 920, and a memory 930. The transceiver 910, the processor 920, and the memory 930 communicate with each other through an internal connection path, to transmit a control signal and/or a data signal.

The transceiver 910 is configured to send first indication information, where the indication information indicates an adjustment value.

The processor 920 is configured to determine the indication information.

It should be understood that, when the processor 920 invokes a computer program from the memory and runs the computer program, the processor 920 may be configured to perform the foregoing method embodiments and implement a function of an execution entity of the method embodiments, for example, a network device.

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It can be clearly understood by a person skilled in the art that, for ease and brevity of description, for detailed working processes of the foregoing system, apparatus, and unit, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

In the foregoing embodiments, all or some of the functions of the functional units may be implemented by software, hardware, firmware, or any combination thereof. When the functions are implemented by software, all or some of the functions may be implemented in a form of a computer program product. The computer program product includes one or more computer instructions (programs). When the computer program instructions (programs) are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods in embodiments of this application. The storage medium includes any medium that can store program code, for example, a USB flash drive, a removable hard disk drive, a ROM, a random access memory (random access memory, RAM), a magnetic disk, or a compact disc.

It should be noted that, in embodiments of this application, "indicate" may include directly indicating and indirectly indicating, or may include explicitly indicating and implicitly indicating. Information indicated by specific information is referred to as to-be-indicated information. During specific implementation, the to-be-indicated information may be indicated in a plurality of manners, for example, but not limited to, a manner of directly indicating the to-be-indicated information, for example, indicating the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon.

First, second, and various numbers in embodiments of this application are merely intended for differentiation for ease of description, but are not intended to limit the scope of embodiments of this application. For example, the terms are intended to distinguish between different indication information or different time intervals.

In embodiments of this application, "predefine" or "preconfigure" may be implemented by prestoring corresponding code or a corresponding table on a device (for example, including a terminal device and a network device), or may be implemented in another manner of indicating related information. A specific implementation thereof is not limited in this application. "Store" may mean being stored in one or more memories. The one or more memories may be separately disposed, or may be integrated in an encoder, a decoder, a processor, or a communication apparatus. Alternatively, some of the one or more memories may be separately disposed, and some of the one or more memories are integrated in a decoder, a processor, or a communication apparatus. A type of the memory may be a storage medium in any form. This is not limited in this application.

The "protocol" in embodiments of this application may be a standard protocol in the communication field, and may include, for example, an LTE protocol, an NR protocol, and a related protocol applied to a future communication system. This is not limited in this application.

In embodiments of this application, "at least one" means one or more, and "a plurality of' means two or more. The term "and/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items" or a similar expression thereof indicates any combination of the items, including one of the items or any combination of a plurality of the items. For example, at least one of a, b, and c may indicate a, b, c, a and b, a and c, b and c, or a, b, and c. a, b, and c each may be in a singular form or a plural form.

In embodiments of this application, the descriptions "when...", "in a case that...", "if", and the like all mean that a device (for example, a terminal device or a network device) performs corresponding processing in an objective case, and are not intended to limit time. The descriptions do not necessarily mean that the device (for example, the terminal device or the network device) performs a determining action during implementation, and do not mean any other limitation.

In this application, a plurality of embodiments are described in detail with reference to a plurality of flowcharts. However, it should be understood that the flowcharts and related descriptions of corresponding embodiments thereof are merely examples for ease of understanding, and shall not constitute any limitation on this application. Each step in the flowcharts does not necessarily need to be performed. For example, some steps may be skipped. In addition, an execution sequence of the steps is not fixed, and is not limited to that shown in the figures. The execution sequence of the steps should be determined based on functions and internal logic of the steps.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink power control method, comprising:

   receiving, by a first terminal device, first indication information sent by a network device, wherein the first indication information indicates a first adjustment value corresponding to a first transmission occasion, the first transmission occasion corresponds to at least one symbol, and the first adjustment value is used for determining first transmit power; and
   sending, by the first terminal device, sidelink information to a second terminal device on the first transmission occasion based on the first transmit power.

2. The method according to claim 1, wherein the method comprises:

determining, by the first terminal device, the first transmit power based on a third power value and/or a fourth power value, wherein

the third power value is determined by the first terminal device based on the first adjustment value and a first power value;

the fourth power value is determined by the first terminal device based on the first adjustment value and a second power value, or the fourth power value is determined by the first terminal device based on a second adjustment value and a second power value that correspond to the first transmission occasion, wherein the second adjustment value is indicated by the first indication information;

the first power value is determined by the first terminal device based on a first indicated power value, downlink transmission loss, and a quantity of resource blocks RBs, wherein the first indicated power value and the downlink transmission loss are determined by the first terminal device, and the RB is used for sending sidelink information on the first transmission occasion; and

the second power value is determined by the first terminal device based on a second indicated power value, sidelink transmission loss, and the quantity of RBs, wherein the second indicated power value and the sidelink transmission loss are determined by the first terminal device.

3. The method according to claim 1 or 2, wherein the first transmission occasion is used for a third terminal device to send uplink information to the network device; or

the first transmission occasion is used for the network device to send downlink information to a third terminal device, wherein

a frequency domain corresponding to the uplink information or the downlink information overlaps a frequency domain corresponding to the sidelink information.

4. The method according to any one of claims 1 to 3, wherein the first adjustment value is any adjustment value in a first set, the first set comprises at least one adjustment value in a predefined adjustment value set, the second adjustment value is any adjustment value in a second set, and the second set comprises at least one adjustment value in a predefined adjustment value set.

5. The method according to any one of claims 1 to 3, wherein the first adjustment value is equal to a sum of at least one adjustment value in a first set and a third adjustment value, the first set comprises at least one adjustment value in a predefined adjustment value set, the second adjustment value is equal to a sum of at least one adjustment value in a second set and a fourth adjustment value, and the second set comprises at least one adjustment value in a predefined adjustment value set; and

the third adjustment value and the fourth adjustment value correspond to a second transmission occasion, the second transmission occasion corresponds to at least one symbol, the third adjustment value is used for determining second transmit power or both the third adjustment value and the fourth adjustment value are used for determining second transmit power, the first terminal device sends sidelink information to the second terminal device on the second transmission occasion at the second transmit power, and the second transmission occasion is earlier than the first transmission occasion.

6. The method according to any one of claims 1 to 5, wherein the first indication information is carried in radio resource control RRC signaling or downlink control information DCI signaling.

7. The method according to any one of claims 1 to 6, wherein the method further comprises:

determining, by the first terminal device based on the first transmit power, third transmit power and fourth transmit power that correspond to the first transmission occasion, wherein the third transmit power and the fourth transmit power correspond to different RBs;

sending, by the first terminal device, sidelink information to the second terminal device on the first transmission occasion at the third transmit power; and

sending, by the first terminal device, sidelink control information to the second terminal device on the first transmission occasion at the fourth transmit power.

8. A sidelink power control method, comprising:

sending, by a network device, first indication information to a first terminal device, wherein the first indication information indicates a first adjustment value corresponding to a first transmission occasion, the first transmission occasion corresponds to at least one symbol, the first adjustment value is used for determining first transmit power, and the first transmit power is power at which the first terminal device sends sidelink information to a second terminal device on the first transmission occasion; or

the first transmit power is used for determining power at which the first terminal device sends sidelink information to a second terminal device on the first transmission occasion.

9. The method according to claim 8, wherein the first transmit power is determined by the first terminal device based on the third power value and/or the fourth power value, wherein

the third power value is determined by the first terminal device based on the first adjustment value and a first power value;

the fourth power value is determined by the first terminal device based on the first adjustment value and a second power value, or the fourth power value is determined by the first terminal device based on a second adjustment value and a second power value that correspond to the first transmission occasion, wherein the second adjustment value is indicated by the first indication information;

the first power value is determined by the first terminal device based on a first indicated power value, downlink transmission loss, and a quantity of resource blocks RBs, wherein the first indicated power value and the downlink transmission loss are determined by the first terminal device, and the RB is used for sending sidelink information on the first transmission occasion; and

the second power value is determined by the first terminal device based on a second indicated power value, sidelink transmission loss, and the quantity of RBs, wherein the second indicated power value and the sidelink transmission loss are determined by the first terminal device.

10. The method according to claim 8 or 9, wherein the first transmission occasion is used for a third terminal device to send uplink information to the network device; or

the first transmission occasion is used for the network device to send downlink information to a third terminal device, wherein

a frequency domain corresponding to the uplink information or the downlink information overlaps a frequency domain corresponding to the sidelink information.

11. The method according to any one of claims 8 to 10, wherein the first adjustment value is any adjustment value in a first set, the first set comprises at least one adjustment value in a predefined adjustment value set, the second adjustment value is any adjustment value in a second set, and the second set comprises at least one adjustment value in a predefined adjustment value set.

12. The method according to any one of claims 8 to 10, wherein the first adjustment value is equal to a sum of at least one adjustment value in a first set and a third adjustment value, the first set comprises at least one adjustment value in a predefined adjustment value set, the second adjustment value is equal to a sum of at least one adjustment value in a second set and a fourth adjustment value, and the second set comprises at least one adjustment value in a predefined adjustment value set; and

the third adjustment value and the fourth adjustment value correspond to a second transmission occasion, the second transmission occasion corresponds to at least one symbol, the third adjustment value is used for determining second transmit power or both the third adjustment value and the fourth adjustment value are used for determining second transmit power, the first terminal device sends sidelink information to the second terminal device on the second transmission occasion at the second transmit power, and the second transmission occasion is earlier than the first transmission occasion.

13. The method according to any one of claims 8 to 12, wherein the first indication information is carried in RRC signaling or DCI signaling.

14. The method according to any one of claims 8 to 13, wherein

the first transmit power is further used for determining third transmit power and fourth transmit power that correspond to the first transmission occasion, and the third transmit power and the fourth transmit power correspond to different RBs, wherein

the third transmit power is power at which the first terminal device sends sidelink information to the second terminal device on the first transmission occasion; and

the fourth transmit power is power at which the first terminal device sends sidelink control information to the second terminal device on the first transmission occasion.

15. A power control method, comprising:

receiving, by a second terminal device, second indication information sent by a first terminal device, wherein the second indication information indicates a fifth adjustment value corresponding to a third transmission occasion, the third transmission occasion corresponds to at least one symbol, and the fifth adjustment value is used for determining fifth transmit power; and
sending, by the second terminal device, sidelink feedback information to the first terminal device on the third transmission occasion at the fifth transmit power.

16. The method according to claim 15, wherein the third transmission occasion is used for a third terminal device to send uplink information to the network device; or

the third transmission occasion is used for the network device to send downlink information to a third terminal device, wherein
a frequency domain corresponding to the uplink information or the downlink information overlaps a frequency domain corresponding to the sidelink feedback information.

17. The method according to claim 15 or 16, wherein the fifth adjustment value is any adjustment value in a third set, and the third set comprises at least one adjustment value in a predefined adjustment value set.

18. The method according to any one of claims 15 to 17, wherein the fifth adjustment value is equal to a sum of at least one adjustment value in a third set and a sixth adjustment value, and the third set comprises at least one adjustment value in a predefined adjustment value set, wherein
the sixth adjustment value corresponds to a fourth transmission occasion, the fourth transmission occasion corresponds to at least one symbol, the sixth adjustment value is used for determining sixth transmit power, the second terminal device sends sidelink feedback information to the first terminal device on the fourth transmission occasion at the sixth transmit power, and the fourth transmission occasion is earlier than the third transmission occasion.

19. A sidelink power control method, comprising:

sending, by a first terminal device, sidelink information to a second terminal device based on first transmit power;
determining, by the first terminal device, second indication information based on the first transmit power and sidelink transmission loss; and
sending, by the first terminal device, the second indication information to the second terminal device, wherein the sidelink transmission loss is determined by the first terminal device, the second indication information indicates the second terminal device to determine a fifth adjustment value, the fifth adjustment value is used for determining fifth transmit power, and the fifth transmit power is power at which the second terminal device sends sidelink feedback information to the first terminal device.

20. The method according to claim 19, wherein the fifth adjustment value is any adjustment value in a third set, and the third set comprises at least one adjustment value in a predefined adjustment value set.

21. The method according to claim 19 or 20, wherein the fifth adjustment value is equal to a sum of at least one adjustment value in a third set and a sixth adjustment value, and the third set comprises at least one adjustment value in a predefined adjustment value set, wherein
the sixth adjustment value corresponds to a fourth transmission occasion, the fourth transmission occasion corresponds to at least one symbol, the sixth adjustment value is used for determining sixth transmit power, the sixth transmit power is power at which the second terminal device sends sidelink feedback information to the first terminal device on the fourth transmission occasion, and the fourth transmission occasion is earlier than the third transmission occasion.

22. A sidelink power control method, comprising:

receiving, by a first terminal device, third indication information sent by a network device, wherein the third indication information indicates a seventh adjustment value corresponding to a fifth transmission occasion, the seventh transmission occasion corresponds to at least one symbol, and the seventh adjustment value is used for determining seventh transmit power; and

sending, by the first terminal device, a sidelink synchronization signal block to a second terminal device on the fifth transmission occasion at the seventh transmit power.

23. The method according to claim 20, wherein the fifth transmission occasion is used for a third terminal device to send uplink information to the network device; or

the fifth transmission occasion is used for the network device to send downlink information to a third terminal device, wherein

a frequency domain corresponding to the uplink information or the downlink information overlaps a frequency domain corresponding to the sidelink synchronization signal block.

24. The method according to claim 22 or 23, wherein the seventh adjustment value is any adjustment value in a fourth set, and the fourth set comprises at least one adjustment value in a predefined adjustment value set.

25. The method according to claim 22 or 23, wherein the seventh adjustment value is equal to a sum of at least one adjustment value in a fourth set and an eighth adjustment value, and the fourth set comprises at least one adjustment value in a predefined adjustment value set, wherein

the eighth adjustment value corresponds to a sixth transmission occasion, the sixth transmission occasion corresponds to at least one symbol, the eighth adjustment value is used for determining eighth transmit power, the first terminal device sends a sidelink synchronization signal block to the second terminal device on the sixth transmission occasion at the eighth transmit power, and the sixth transmission occasion is earlier than the fifth transmission occasion.

26. The method according to any one of claims 22 to 25, wherein the third indication information is carried in RRC signaling or DCI signaling.

27. A sidelink power control apparatus, comprising:

a unit for implementing the method according to any one of claims 1 to 7, claims 15 to 18, claims 19 to 21, or claims 22 to 26; and

a unit for implementing the method according to any one of claims 8 to 14.

28. A sidelink power control system, comprising a first apparatus and a second apparatus, wherein

the first apparatus is configured to implement the method according to any one of claims 1 to 7, claims 15 to 18, claims 19 to 21, or claims 22 to 26; and

the second apparatus is configured to implement the method according to any one of claims 8 to 14.

29. A computer-readable storage medium, wherein the computer-readable storage medium stores a computer program, and when the computer program is run,

an apparatus is enabled to perform the method according to any one of claims 1 to 7, claims 15 to 18, claims 19 to 21, or claims 22 to 26; or

an apparatus is enabled to perform the method according to any one of claims 8 to 14.

30. A chip system, comprising a memory and a processor, wherein the memory is configured to store a computer program, and the processor is configured to invoke the computer program from the memory and run the computer program, to

enable a communication apparatus on which the chip system is installed to perform the method according to any one of claims 1 to 7, claims 15 to 18, claims 19 to 21, or claims 22 to 26; or

enable a communication apparatus on which the chip system is installed to perform the method according to any one of claims 8 to 14.

FIG. 1

FIG. 2

| Bitmap | | | | Bitmap (repeated) | | | | ... | Bitmap (repeated) | |
|---|---|---|---|---|---|---|---|---|---|---|
| Slot 0 | Slot 1 | ... | Slot 7 | Slot 8 | Slot 9 | ... | Slot 15 | Slot 16 | ... | Slot N |

FIG. 3

Bitmap: 11001110

◪ Subframe used for sidelink transmission

☐ Normal subframe

Spectrum

Subchannel 1 — $n_{CH}$

Sequence number of a starting resource block

Subchannel 2 — $n_{CH}$

...

Subchannel N — $n_{CH}$

FIG. 4

100

| Third terminal device | Network device | | First terminal device | Second terminal device |

Uu communication

SL communication

S110: Send first indication information

S121: Determine a first adjustment value

S122: Determine first transmit power

S111: Send uplink or downlink information on a first transmission occasion

S123: The first terminal device sends sidelink information on the first transmission occasion based on the first transmit power

Physical sidelink shared channel

FIG. 5

Uu
communication

Uplink        Downlink

A sidelink causes
interference to the
uplink

Terminal device 3        The sidelink
causes interference
to the downlink

Terminal device 1

PC5
communication

Terminal device 2

FIG. 6

Uu
communication

Uplink        Downlink

The downlink
causes interference
to a sidelink

Terminal device 3        The uplink causes
interference to the
sidelink

Terminal device 1

PC5
communication

Terminal device 2

FIG. 7

PL1
(D1)
Uu communication $P_{max1}$

Terminal device 3

Network device

PL5

PL6

PL2
(D2)

PL4
(D4)

PL3
(D3)
PC5 communication $P_{max2}$

Terminal device 1

Terminal device 2

FIG. 8

200

| Third terminal device | Network device | | First terminal device | Second terminal device |

Uu communication

SL communication

S210: Send first indication information

S221: Determine a first adjustment value

S222: Determine a third power value and/or a fourth power value

S223: Determine first transmit power

S211: Send uplink or downlink information on a first transmission occasion

S224: The first terminal device sends sidelink information on the first transmission occasion based on the first transmit power

Physical sidelink shared channel

FIG. 9

300

| Third terminal device | Network device | | First terminal device | Second terminal device |

Uu communication

SL communication

S310: Send first indication information

S321: Determine a first adjustment value

S322: Determine a third power value and/or a fourth power value

S323: Determine first transmit power

S324: Determine third transmit power and fourth transmit power based on the first transmit power

S311: Send uplink or downlink information on a first transmission occasion

S325: The first terminal device sends sidelink information on the first transmission occasion at the third transmit power

Physical sidelink shared channel

S326: The first terminal device sends sidelink control information on the first transmission occasion at the fourth transmit power

Physical sidelink control channel

FIG. 10

400

```
┌─────────────┐        ┌─────────────┐    ┌─────────────┐  ┌─────────────┐
│Second terminal│        │First terminal│    │Third terminal│  │  Network    │
│   device    │        │   device    │    │   device    │  │   device    │
└──────┬──────┘        └──────┬──────┘    └──────┬──────┘  └──────┬──────┘
       │                      │                                Uu
       │                      │              communication
       │    SL communication  │                  │              │
       │◄────────────────────►│                  │              │
       │  S410: Send second   │                  │              │
       │  indication information                 │              │
       │◄─────────────────────│                  │              │
┌──────┴──────┐               │                  │              │
│ S421: Determine a           │                  │              │
│ fifth adjustment value      │                  │              │
└──────┬──────┘               │                  │              │
┌──────┴──────┐               │                  │              │
│ S422: Determine fifth       │                  │              │
│  transmit power             │                  │              │
└──────┬──────┘               │                  │              │
```

| S423: The second terminal device sends sidelink feedback information on a third transmission occasion at the fifth transmit power | S411: Send uplink or downlink information on a first transmission occasion |

Physical sidelink feedback channel

FIG. 11

500

| Third terminal device | Network device | | First terminal device | Second terminal device |

Uu communication

SL communication

S510: Send third indication information

S521: Determine a seventh adjustment value

S522: Determine seventh transmit power

S511: Send uplink or downlink information on a fifth transmission occasion

S523: The first terminal device sends a sidelink synchronization signal block on the fifth transmission occasion at the seventh transmit power

Physical sidelink broadcast channel

FIG. 12

Communication apparatus 600

Transceiver unit 610

Processing unit 620

Storage unit 630

FIG. 13

Communication apparatus 700

Transceiver unit 710

Processing unit 720

Storage unit 730

FIG. 14

Terminal device 800

Processor
820

Transceiver
810

Memory
830

FIG. 15

Network device 900

Processor
920

Transceiver
910

Memory
930

FIG. 16

## INTERNATIONAL SEARCH REPORT

| International application No. |
| --- |
| **PCT/CN2024/072766** |

### A. CLASSIFICATION OF SUBJECT MATTER

H04W72/0446(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, 3GPP: 发射, 功率, 控制, 空口, 传输, 侧链路, 旁链路, 副链路, 边链路, 指示, 调整, 重叠, 冲突, transmission, transmitter, power, control, Uu, sidelink, SL, indication, indicator, adjust, overlapping, conflict

### C. DOCUMENTS CONSIDERED TO BE RELEVANT

| Category* | Citation of document, with indication, where appropriate, of the relevant passages | Relevant to claim No. |
| --- | --- | --- |
| X | WO 2021026715 A1 (GUANGDONG OPPO MOBILE TELECOMMUNICATIONS CORP., LTD.) 18 February 2021 (2021-02-18) <br> description, page 4, line 3-page 15, line 17, and claims 1-78 | 1-30 |
| X | US 2020260386 A1 (SAMSUNG ELECTRONICS CO., LTD.) 13 August 2020 (2020-08-13) <br> claims 1-20 | 1-30 |
| X | US 2022217649 A1 (LG ELECTRONICS INC.) 07 July 2022 (2022-07-07) <br> claims 1-21 | 1-30 |
| A | CN 111385862 A (HUAWEI TECHNOLOGIES CO., LTD.) 07 July 2020 (2020-07-07) <br> entire document | 1-30 |
| A | CN 114339795 A (VIVO COMMUNICATION TECHNOLOGY CO., LTD.) 12 April 2022 (2022-04-12) <br> entire document | 1-30 |
| A | INTEL CORP. "Sidelink Power Control for Wearable and IoT Use Cases" <br> *3GPP TSG RAN WG1 Meeting #89 R1-1707334*, 19 May 2017 (2017-05-19), <br> entire document | 1-30 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 March 2024** | **21 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/072766**

| Patent document cited in search report | | | Publication date (day/month/year) | Patent family member(s) | | | Publication date (day/month/year) |
|---|---|---|---|---|---|---|---|
| WO | 2021026715 | A1 | 18 February 2021 | US | 2022110074 | A1 | 07 April 2022 |
| | | | | CN | 113994742 | A | 28 January 2022 |
| US | 2020260386 | A1 | 13 August 2020 | WO | 2020167000 | A1 | 20 August 2020 |
| | | | | EP | 3909315 | A1 | 17 November 2021 |
| | | | | US | 2021337485 | A1 | 28 October 2021 |
| | | | | KR | 20200099058 | A | 21 August 2020 |
| | | | | CN | 113475129 | A | 01 October 2021 |
| US | 2022217649 | A1 | 07 July 2022 | WO | 2020209642 | A1 | 15 October 2020 |
| CN | 111385862 | A | 07 July 2020 | EP | 3893560 | A1 | 13 October 2021 |
| | | | | US | 2022110069 | A1 | 07 April 2022 |
| | | | | WO | 2020135273 | A1 | 02 July 2020 |
| | | | | IN | 202127028237 | A | 10 September 2021 |
| CN | 114339795 | A | 12 April 2022 | WO | 2022068885 | A | 07 April 2022 |
| | | | | KR | 20230078778 | A | 02 June 2023 |
| | | | | IN | 202327029180 | A | 16 June 2023 |
| | | | | US | 2023239807 | A1 | 27 July 2023 |
| | | | | EP | 4224950 | A1 | 09 August 2023 |
| | | | | JP | 2023543828 | W | 18 October 2023 |

Form PCT/ISA/210 (patent family annex) (July 2022)

**EP 4 654 708 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310128612